# EUROPEAN PATENT SPECIFICATION

(11) **EP 0 731 954 B1**
(45) Date of publication and mention of the grant of the patent: **22.01.2003**
(21) Application number: 95931767.8
(22) Date of filing: 07.09.1995
(51) Int. Cl.: G06K 9/00, B07C 5/342, G07D 7/00

(54) **METHOD AND APPARATUS FOR DISCRIMINATING, AUTHENTICATING AND/OR COUNTING DOCUMENTS**
VERFAHREN UND GERÄT ZUR DOKUMENTENERKENNUNG, AUTHENTIFIZIERUNG UND/ODER ZÄHLUNG
METHODE ET DISPOSITIF DE TRI, D'AUTHENTIFICATION ET DE COMPTAGE DE DOCUMENTS

(30) Priority: 04.10.1994 US 317349; 14.11.1994 US 340031; 08.03.1995 WO PCT/US95/02992; 23.06.1995 US 494091; 21.07.1995 US 505773; 31.08.1995 US 522173
(43) Date of publication of application: 18.09.1996
(60) Divisional application: 97116644.2
(73) Proprietor: CUMMINS-ALLISON CORPORATION, Mount Prospect, Illinois 60056 (US)
(72) Inventor: MENNIE, Douglas U., Barrington, IL 60010 (US); GRAVES, Bradford T., Arlington Heights, IL 60005 (US); JONES, William J., Kennilworth, IL 60043 (US); JONES, John E., Winnetka, IL 60043 (US); MUNRO, Mark C., Park Ridge, IL 60068 (US); CSULITS, Frank M., Gurnee, IL 60031 (US)
(74) Representative: Grünecker, Kinkeldey, Stockmair & Schwanhäusser Anwaltssozietät
(86) International application number: US9511393
(87) International publication number: WO96010800

(56) References cited:
- WO-A-94/19773
- US-A- 4 653 647
- US-A- 4 677 682
- US-A- 5 163 672
- US-A- 5 207 788
- US-A- 5 341 408
- US-A- 5 430 664

## Description

The present invention refers to an apparatus and method for counting and discriminating currency bills as set forth in the preamble of claims 1 and 33, respectively. An apparatus and method of this kind are known from WO94/19773.

The afore-mentioned document discloses a document processing apparatus incorporating a counterfeit detection system for identifying counterfeit suspect documents on the basis of the magnetic characteristics of the documents. Such document may be a currency bill. Each document is transported within the vicinity of a magnetic read head which produces an electronic signal in response thereto. The apparatus is halted upon detection of a misfed or unfit document so that the user may remove such document from the apparatus. A message indicating the type of error is shown on a display upon detection of such error document. The apparatus is not able to process bills of different denominations at a time in a manner as to sort such bills in accordance with their denomination.

US-A-5,341,408 discloses a currency counter for counting currency notes withdrawn from a supply and advancing the notes one by one along a pass past a density detector and a magnetic material detector to a stacker at a delivery location upon energization of a common drive motor in which an amplifier responsive to the density detector is automatically calibrated each time the counter starts and in which density and motor current signals are combined for doubles detection. The motor speed is adjusted for document length to provide a predetermined number of counts per minute. An adaptive counterfeit check is made as well.

GB-A-2 061 232 discloses a banknote tester for one denomination with unit count.

EP-A-0 613 107 discloses a device for handling a stack of bills with different denominations.

Depending on the design of a discriminator, bills may be transported and scanned either along their long dimension or their narrow dimension. For a discriminator that transport bills in their narrow dimension, it is possible that a given bill may be oriented either face up or face down and either top edge first ("forward" direction) or top edge last ("reverse" direction). For discriminators that transport bills in their long dimension, it is possible that a given bill may be oriented either face up or face down and either left edge first ("forward" direction) or left edge last ("reverse" direction). The manner in which a bill must be oriented as it passes a discriminating unit depends on the characteristics of the discriminator. Some discriminators are capable of identifying the denomination of a bill only if it is fed with a precise orientation, e.g., face up and top edge first. Other discriminators are capable of identifying bills provided they are "faced" (i.e., fed with a predetermined face orientation, that is all face up or all face down). For example, such a discriminator may be able to identify a bill fed face up regardless of whether the top edge is fed first or last. Other discriminators are capable of identifying the denomination fed with any orientation. However, whether a given discriminator can discriminate between bills fed with different orientations depends on the discriminating method used. For example, a discriminator that discriminates bills based on patterns of transmitted light may be able to identify the denomination of a forward fed bill regardless of whether the bill is fed face up or face down, but the same discriminator would not be able to discriminate between a bill fed face up and a bill fed face down.

There remains a need for a discriminator that can detect and flag the presence of a bill oriented with an incorrect forward/reverse orientation and a discriminator that can sort between forward-oriented bills and reverse-oriented bills.

Furthermore, for a number of reasons, a discriminating unit may be unable to determine the denomination of a bill. These reasons include a bill being excessively soiled, worn, or faded, a bill being torn or folded, a bill being oriented in a manner that the discriminating unit cannot handle, and the discriminating unit having poor discriminating performance. Furthermore, the discriminating unit and/or a separate authenticating unit may determine that a bill is not genuine. In some known current discriminators, such unidentified or non-genuine bills are deposited in a reject receptacle, or they have to be taken out manually from the apparatus, see WO 94/19773 above.

A characteristic of the above described discriminators is that the value of any rejected unidentified bills is not added to the running total of the aggregate value of the stack of bills nor do the counters keeping track of the number of each currency denomination reflect the rejected unidentified bills. While this is desirable with respect to bills which are positively identified as being fake, it may be undesirable with respect to bills which were not identified for other reasons even though they are genuine bills. While the bills in a reject receptacle may be re-fed through the discriminator, the operator must then add the totals from the first batch and the second batch together. Such a procedure can be inefficient in some situations. Also, if a bill was rejected the first time because it was, for example, excessively soiled or too worn, then it is likely that the bill will remain unidentified by the discriminating unit even if re-fed.

A problem with the above described situations where the totals and/or counts do not reflect all the genuine bills in a stack is that an operator must then count all the unidentified genuine bills by hand and add such bills to separately generated totals. As a result the chance for human error increases and operating efficiency decreases. Take for example a bank setting where a customer hands a teller a stack of currency to be deposited. The teller places the stack of bills in a discriminator, the display on the discriminator indicates that a total of $730 has been identified. However, fourteen genuine bills remain unidentified. As a result, the teller must count these fourteen bills by hand or re-fed through the discriminator and then add their total to the $730 total. An error could result from the teller miscounting the unidentified bills, the teller forgetting to add the two totals together, or the teller overlooking the unidentified bills entirely and only recording a deposit of $730. Moreover, even if the teller makes no mistakes, the efficiency of the teller is reduced by having to manually calculate additional totals. The decrease in efficiency is further aggravated where detailed records must be maintained about the specific number of each denomination processed during each transaction.

Therefore, there is a need for a currency discriminator which is capable of conveniently and efficiently accommodating genuine bills that, for whatever reason, remain unidentified after passing through the discriminating unit of a discriminator.

There is also a need for a currency discriminator that makes it easy for an operator to reconcile the value of any flagged bills so that their value will be reflected in appropriate counters keeping track of processed bills. Additionally, there is a need for a discriminator that will prompt the operator as to the denominations of any flagged bills.

### Summary Of The Invention

It is an object of the present invention to provide an improved method and apparatus for identifying, authenticating, and/or counting currency bills comprising a plurality of currency denominations.

In accordance with the present invention, the foregoing object is attained by the features of claim 1 and 33, respectively. Preferred embodiments of the invention are subject matter of the respective dependent claims.

According to one embodiment a currency discriminator is provided that counts and discriminates bills as they pass a discriminating unit and that flags an unidentified bill or one having a predetermined characteristic, for example a bill having a specified orientation, by transferring the flagged bill to a location where it can be conveniently examined by an operator and then suspending the operation of the discriminator. The operator may then examine the bill and determine whether the bill is acceptable or not. Denomination selection elements such as keys are provided to enable the operator with the depression of a single button to indicate the denomination of an unidentified but acceptable bill, to cause the value of the bill to be reflected in any appropriate counters, and to cause the discriminator to resume operation. A continuation selection element is also provided to enable the operator to cause the discriminator to resume operation without adversely affecting any counters when an unidentified bill is determined to be unacceptable.

According to one embodiment of the present invention, a discriminator is provided with a single output receptacle in which all bills are stacked after they pass by the discriminating unit. When an unidentified bill is detected, the discriminator halts operation with the unidentified bill positioned at a predetermined location within the stack such as at the top or back of the stack of bills in the output receptacle or at a predetermined position just prior to the stack. The bill may then be conveniently examined by the operator.

According to another embodiment of the present invention, a discriminator is provided with an examining station where unidentified bills are transferred before the discriminator halts operation. Upon determination that a bill is acceptable, the bill may then be transferred to the output receptacle in a single output receptacle discriminator or to an output receptacle associated with the denomination or other characteristic of the bill in a multi-output receptacle discriminator. Additionally, a reject receptacle may be provided for receiving bills which are determined to be unacceptable.

In one embodiment, a discriminator is provided with two or more output receptacles. All flagged bills are delivered to a separate output receptacle while the discriminator continues to process any remaining bills. Alternatively, bills that are positively determined to be suspect bills may be delivered to one output receptacle, all other flagged bills may be delivered to a second output receptacle, and all unflagged and identified bills may be delivered to one or more additional output receptacles. In another embodiment, suspect bills are routed to a separate output receptacle while all other bills are routed to one or more additional output receptacles.

The discriminator, in another embodiment is designed to suspend operation upon encountering one or more types of flagged bills. For example, the discriminator may halt operation when a no call bill is detected but not when a suspect bill is detected, e.g., when suspect bills are routed to an output receptacle separate from the output receptacle or receptacles to which other bills are routed. According to another embodiment, the discriminator does not suspend its operation upon detecting a flagged bill but rather continues processing any remaining bills, e.g., when flagged bills are routed to one or more output receptacles separate from the output receptacle or receptacles to which non-flagged bills are delivered.

According to one embodiment, the value of any flagged bill such as a no call is reconciled on-the-fly, that is, at the time such bill is encountered. According to one such embodiment, the discriminator suspends operation until the value of the flagged bill is reconciled.

According to another embodiment, the value of any flagged bills is reconciled after all bills have been processed. Alternatively, the reconciliation process may begin before all bills have been processed but without suspending the processing of the remaining bills.

According to one embodiment, denomination indicating means are provided to permit the operator to indicate the value of a flagged bill such as a no call. Examples of denomination indicating means include, for example, denomination selection elements such as keys, buttons, switches, lights, and displayed keys, denominations, or messages. Such elements may be selected by, for example, pressing an appropriate one of such elements or using scroll keys. The selection of a denomination may cause that denomination to be indicated to the discriminator or, alternatively, a denomination may first have to be selected and then indicated to the discriminator by selecting an accept, yes, or enter key.

According to one embodiment, prompting means are provided whereby the discriminator is able to suggest a denomination to the operator of the discriminator in connection with a flagged bill such a no call. Examples of criteria used in prompting a denomination to the operator in connection with a flagged bill include suggesting a denomination or a sequence of denominations based on a default basis, random basis, user-defined basis, manufacturer defined basis, last bill information, last no call information, last called denomination information, historical information, comparison of scanned and reference information such as correlation information. Means for prompting a denomination may include, for example, displaying a message, highlighting or illuminating a denomination selection or indicating element or associated light.

According to another embodiment of the present invention, a discriminator discriminates a stack of bills and flags bills having a given forward/reverse orientation. Accordingly, when a stack of bills predominately oriented in the forward or reverse direction is discriminated by the discriminator, any bills oriented in the opposite forward/reverse direction may be flagged. Any flagged bills may either be removed without replacement or re-oriented in the appropriate forward or reverse direction. As a result, a stack of bills may be generated in which all bills have the same forward/reverse orientation. Alternatively, in a multi-output receptacle discriminator, instead of flagging bills based on their forward/reverse orientation, bills having a forward orientation may be routed to one output receptacle and those having a reverse orientation may be routed to another output receptacle.

Likewise a discriminator may flag or sort bills based on their face orientation, that is face up or face down, or bills not belonging to a given denomination. Furthermore, the above criteria may be combined in various operating modes of the discriminator.

The above summary of the present invention is not intended to represent each embodiment, or every aspect of the present invention. This is the purpose of the figures and detailed description which follow.

### Brief Description Of The Drawings

FIG. 1 is a perspective view of a currency scanning and counting machine embodying the present invention;
FIG. 2 is a functional block diagram of the currency scanning and counting machine of FIG. 1 illustrating an embodiment in which a scanhead is arranged on each side of a transport path;
Fig. 3 is a flow chart illustrating the sequence of operations involved in determining the bill denomination from the correlation results;
FIG. 4a is a flow chart illustrating the sequence of operations involved in determining the bill denomination from the correlation results using data retrieved from the green side of U.S. bills according to one embodiment of the present invention;
FIGs. 4b and 4c are a flow chart illustrating the sequence of operations involved in determining the bill denomination from the correlation results using data retrieved from the black side of U.S. bills;
Fig. 5 is a vertical sectional view approximately through the center of the machine of FIG. 1 which illustrates the transport rolls and mechanisms in a side elevation;
Fig. 6 is a section view of the sensing device;
FIG. 7a is a section view of the lower member of the sensing device and an end elevation of the upper member of the sensing device;
FIG. 7b is a section view of the lower member of the sensing device and an end elevation of the upper member of the sensing device in which the handles are latched onto a shaft;
FIG. 8 is a section view of the sensing device incorporating solenoids for separating the two members of the sensing device;
FIG. 9 is an enlarged bottom plan view of the lower member of the scanning device of Fig. 6 or 8 and the passive transport rolls mounted on the lower member;
FIG. 10 is a bottom plan view of the upper member in the scanning device of Fig. 6 or 8 which includes the upper scanhead;
Fig. 11 is a functional block diagram illustrating one embodiment of a document authenticator and discriminator according to the present invention;
Fig. 12 is a functional block diagram illustrating another embodiment of a document authenticator and discriminator according to the present invention;
Fig. 13a is a functional block diagram illustrating another embodiment of a document authenticator and discriminator according to the present invention;
Fig. 13b is a functional block diagram illustrating another embodiment of a document authenticator and discriminator according to the present invention;
Fig. 14 is an enlarged plan view of the control and display panel in the machine of FIG. 1;
FIGs. 15-20 are enlarged plan views of various embodiments of control panels; and
Fig. 21 is an exploded perspective view of a touch screen device.

### Detailed Description Of The Embodiments

While the invention is susceptible to various modifications and alternative forms, specific embodiments thereof have been shown by way of example in the drawings and will herein be described in detail. It should be understood, however, that it is not intended to limit the invention to the particular forms disclosed, but on the contrary, the intention is to cover all modifications, equivalents, and alternatives falling within the scope of the invention as defined by the appended claims.

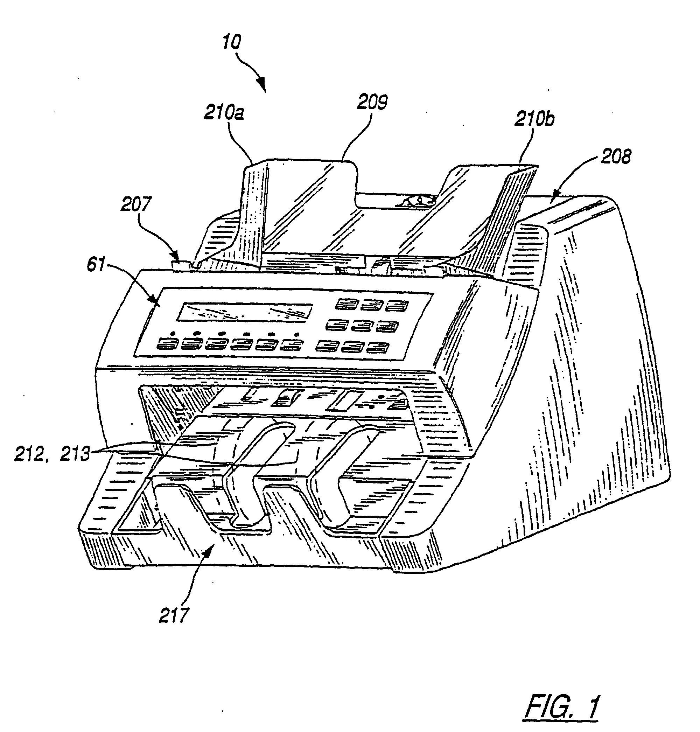

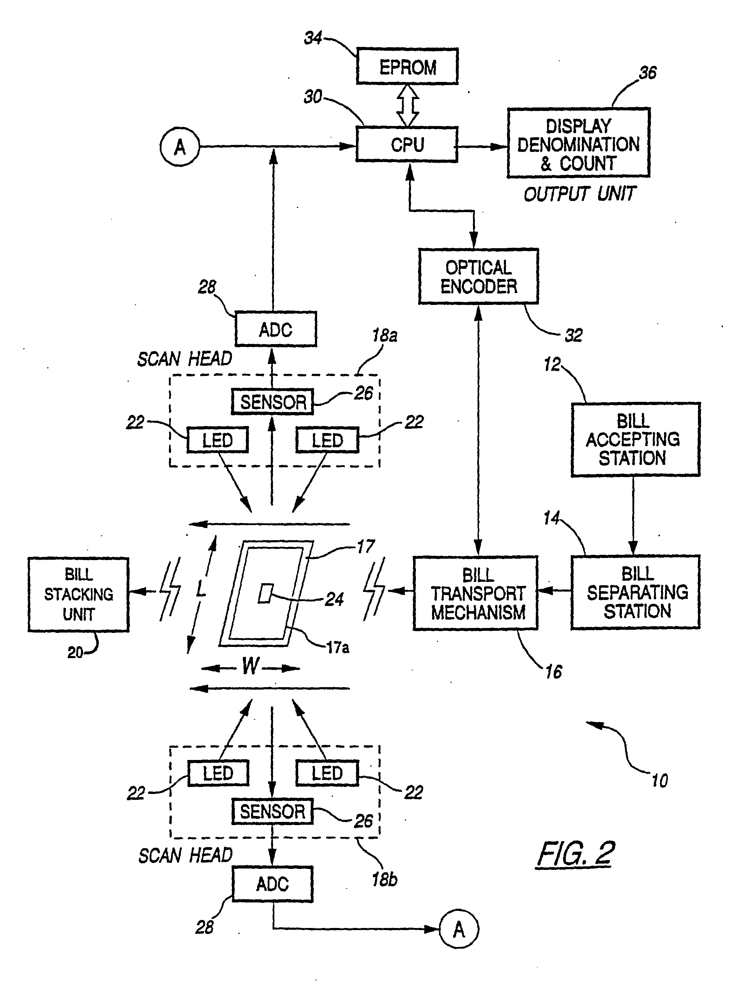

Referring now to FIGs. 1 and 2, there is shown one embodiment of a currency scanning and counting machine 10 according to the present invention. The machine 10 includes an input receptacle or bill accepting station or input hopper 12, 209 where stacks of currency bills that need to be identified and counted are positioned. Bills in the input receptacle are acted upon by a bill separating station 14 which functions to pick out or separate one bill at a time for being sequentially relayed by a bill transport mechanism 16 (FIG. 2), according to a precisely predetermined transport path, between a pair of sensors or scanheads 18a, 18b where the currency denomination of the bill is scanned and identified. In one embodiment, bills are scanned and identified at a rate in excess of 800 bills per minute. In the embodiment depicted, each scanhead 18a, 18b is an optical scanhead that scans for characteristic information from a scanned bill 17 which is used to identify the denomination of the bill. The scanned bill 17 is then transported to an output receptacle or bill stacking station 20, 217 where bills so processed are stacked for subsequent removal. As seen in FIG. 1, the output receptacle 217 comprises stacker wheels 212, 213 which project upwardly through a pair of openings in a stacker plate 214 to receive the bills as they are advanced across the downwardly sloping upper surface of the stacker plate 214. The stacker wheels 212 and 213 are supported for rotational movement about a shaft 215 journalled on the rigid frame and driven by a stacker motor 216.

The operation of the currency scanning and counting machine 10 of FIGs. 1 and 2 is described in more detail in PCT application Serial No. PCT/US95/02992. See also U.S. Pat. No. 5,295,196. Such discrimination systems may process bills at speeds of the order of 800 to 1500 bills per minute, including speeds in excess of 800 and 1000 bills per minute according to various embodiments.

Each optical scanhead 18a, 18b preferably comprises a pair of Light sources 22 directing light onto the bill transport path so as to illuminate a substantially rectangular light strip 24 upon a currency bill 17 positioned on the transport path adjacent the scanhead 18. Light reflected off the illuminated strip 24 is sensed by a photodetector 26 positioned between the two light sources. The analog output of the photodetector 26 is converted into a digital signal by means of an analog-to-digital (ADC) convertor unit 28 whose output is fed as a digital input to a central processing unit (CPU) 30.

While scanheads 18a, 18b of FIG. 2 are optical scanheads, it should be understood that it may be designed to detect a variety of characteristic information from currency bills. Additionally, the scanhead may employ a variety of detection means such as magnetic, optical, electrical conductivity, and capacitive sensors.

Referring again to FIG. 2, as a bill 17 traverses the scanheads 18a, 18b, the coherent light strip 24 effectively scans the bill. A series of detected reflectance signals are obtained across the the bill and the resulting analog signals are digitized under control of the CPU 30 to yield a fixed number of digital reflectance data samples. The normalized reflectance data represents a characteristic pattern that is unique for a given bill denomination and provides sufficient distinguishing features among characteristic patterns for different currency denominations.

In order to ensure strict correspondence between reflectance samples obtained by scanning of successive bills, the reflectance sampling process is preferably controlled through the CPU 30 by means of an optical encoder 32 which is linked to the bill transport mechanism 16 and precisely tracks the physical movement of the bill 17 between the scanheads 18a, 18b. More specifically, the optical encoder 32 is linked to the rotary motion of the drive motor which generates the movement imparted to the bill along the transport path. In addition, the mechanics of the feed mechanism ensure that positive contact is maintained between the bill and the transport path, particularly when the bill is being scanned by the scanheads. Under these conditions, the optical encoder 32 is capable of precisely tracking the movement of the bill 17 relative to the light strips 24 generated by the scanheads 18a, 18b by monitoring the rotary motion of the drive motor.

The optical sensing and correlation technique is based upon using the above process to generate a series of stored intensity signal patterns using genuine bills for each denomination of currency that is to be detected. According to one embodiment, two or four sets of master intensity signal samples are generated and stored within the system memory, preferably in the form of an EPROM 34 (see FIG. 2), for each detectable currency denomination. According to one embodiment these are sets of master green-surface intensity signal samples. In the case of U.S. currency, the sets of master intensity signal samples for each bill are generated from optical scans, performed on the green surface of the bill and taken along both the "forward" and "reverse" directions relative to the pattern printed on the bill. Alternatively, the optical scanning may be performed on the black side of U.S. currency bills or on either surface of foreign bills. Additionally, the optical scanning may be performed on both sides of a bill.

The CPU 30 is programmed to identify the denomination of the scanned bill as corresponding to the set of stored intensity signal samples for which the correlation number resulting from pattern comparison is found to be the highest. If a "positive" call can not be made for a scanned bill, an error signal is generated.

Using the above sensing and correlation approach, the CPU 30 is programmed to count the number of bills belonging to a particular currency denomination as part of a given set of bills that have been scanned for a given scan batch, and to determine the aggregate total of the currency amount represented by the bills scanned during a scan batch. The CPU 30 is also linked to an output unit 36 (FIG. 2) which is adapted to provide a display of the number of bills counted, the breakdown of the bills in terms of currency denomination, and the aggregate total of the currency value represented by counted bills. The output unit 36 can also be adapted to provide a print-out of the displayed information in a desired format.

A correlation formula which may be used in the present invention is disclosed and explain in U.S. Pat. No. 5,295,196 and PCT application Serial No. POT/U595/02992. PIGs. 3 and 4a-4c illustrated thresholding tests which may be peformed by the discriminator in conjunction with determining the denominations of scanned bills. These figures are described in more detail in PCT application Serial No. PCT/US95/02992.

In some embodiments of the present invention the operation of the discriminator is suspended when a bill such as a no call is to be flagged. In some embodiments the transport mechanism is brought to a halt so that the flagged bill is the last bill deposited in an output receptacle or inspection station. The manner of suspending the operation of the discriminator and halting of the transport mechanism is explained in more detailed in U.S. Pat. No. 5,295,196 and PCT application Serial No. PCT/US95/02992.

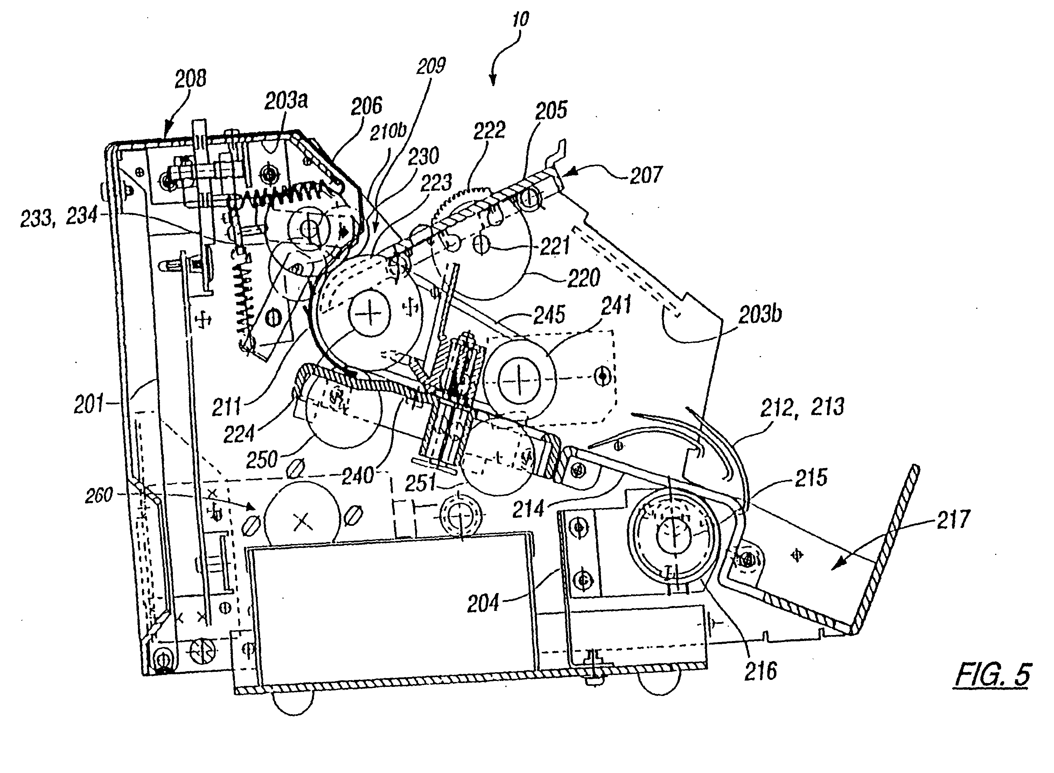

Referring now to Fig. 5, the mechanical portions of a currency scanning and counting machine 10 include a rigid frame formed by a pair of side plates 201 (only one shown), a pair of top plates 203a and 203b, and a lower front plate 204. The input receptacle region for receiving a stack of bills to be processed is formed by downwardly sloping and converging walls 205 and 206 which are parts of removable covers 207 and 208, respectively, that snap onto the frame. The rear wall 206 supports the removable input hopper 209 which includes a pair of vertically disposed side walls 210a and 210b (both shown in FIG. 1).

To initiate the scanning process, currency bills are stacked on the bottom wall 205 and are stripped, one at a time, from the bottom of the stack. The bills are stripped by a pair of auxiliary feed wheels 220 mounted on a drive shaft 221 which, in turn, is supported across the side walls 201. The auxiliary feed wheels 220 project through a pair of slots formed in the cover 207. Each auxiliary feed wheel 220 includes a raised high-friction, serrated surface 222 around a portion of the periphery which engages the bottom bill of the input stack as the auxiliary feed wheels 220 rotate to initiate the movement of the bottom bill from the stack. The serrated surface 222 projects radially beyond the rest of the wheel periphery so that the wheels "jog" the bill stack during each revolution so as to loosen the bottom currency bill within the stack and the bottom bill fram the stack. The auxiliary feed wheels 220 move each stripped bill onto a drive roll 223 mounted on a driven shaft 224 supported across the side walls 201.

To ensure firm engagement between the drive roll 223 and the currency bill being fed, an idler roll 230 urges each incoming bill against a smooth central surface of the drive roll 223. The idler roll 230 is journalled on a pair of arms which are pivotally mounted on a support shaft. A pair of stripping wheels 233 and 234 are also mounted on the shaft 232 on opposite sides of the idler roll 230. The grooves in these two stripping wheels 233, 234 are registered with the central ribs in the two grooved surfaces of the drive roll 223. Although the idler roll 230 and the stripping wheels 233, 234 are mounted behind the guideway 211, the guideway 211 is apertured to allow the idler roll 230 and the stripping wheels 233, 234 to engage the bills on the front side of the guideway 211.

To prepare the bills for scanning, the bills transported by the drive roll 223 engage a flat guide plate 240 on which a sensing device is mounted at the lower end of the curved guideway 211. Currency bills are positively driven along the flat plate 240 by means of a transport roll arrangement which includes the drive roll 223 at one end of the flat plate 240 and a smaller drive roll 241 at the other end of the plate. Both the drive roll 223 and the smaller drive roll 241 include pairs of smooth raised cylindrical surfaces which hold the bill flat against the plate 240. A transport motor 260 drives both drive roll 223 and smaller drive roll 241 through a series of belts and pulleys. Additionally, the auxiliary feed wheels 220 are driven by the transport motor 260 via a pulley or belt attached on drive roll 223. A pair of O rings 245 (only one shown) fit into grooves formed in both the smaller drive roll 241 and the drive roll 223 to continuously engage the bill between the two rolls 223 and 241 and transport the bill while holding it flat against the guide plate 240.

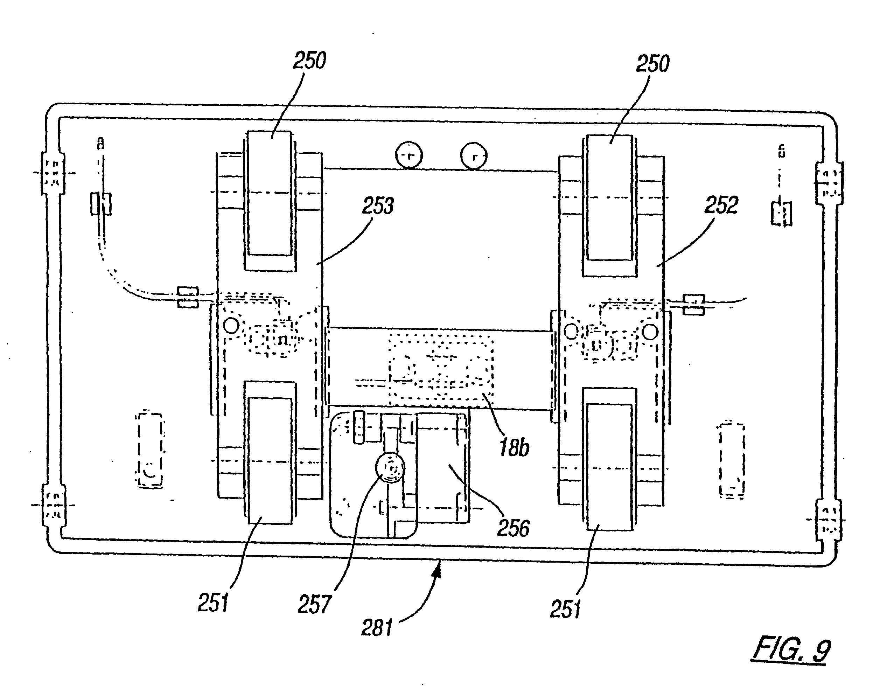

The flat guide plate 240 is provided with openings through which the raised surfaces of both the drive roll 223 and the smaller driven roll 241 are subjected to counter-rotating contact with corresponding pairs of passive transport rolls 250 and 251 having high-friction rubber surfaces. The passive rolls 250, 251 are mounted on the underside of the flat plate 240 in such a manner as to be freewheeling about their axes and biased into counter-rotating contact with their corresponding drive rolls 223, 241. The passive rolls 250, 251 are biased into contact with their corresponding drive rolls 223 and 241 by means of a pair of leaf springs 252, 253 (shown in FIG. 9).

The points of contact between the drive rolls 223, 241 and passive rolls 250, 251 are preferably coplanar with the level surface of the flat plate 240 so that currency bills can be positively driven along the upper surface of the flat plate 240 in a smooth, flat manner. The distance between the axes of the two drive rolls 223 and 241 is selected to be just short of the length of the narrow dimension of the currency bills. Accordingly, the bills are firmly gripped under uniform pressure between both pairs of transport rolls, thereby minimizing the possibility of bills being skewed or twisted which enhances the reliability of the overall scanning process.

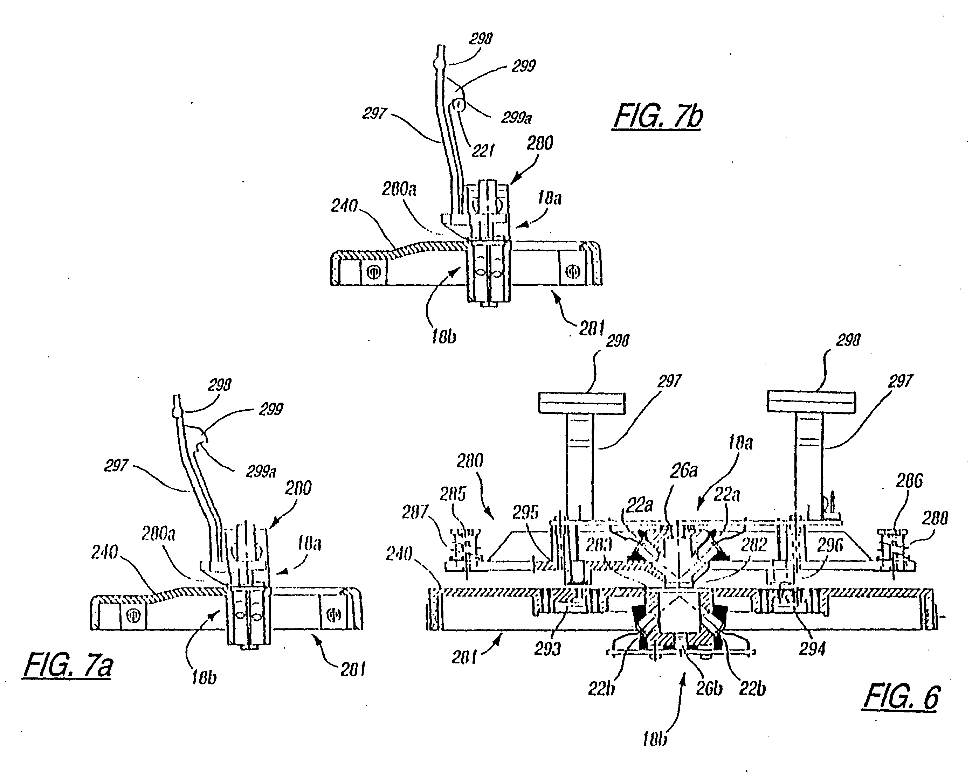

The sensing device which includes a pair of scanheads 18a and 18b is shown in detail in FIGS. 6, 7a, and 7b. It can be seen that the housing for each scanhead 18a and 18b is formed as an integral part of a unitary molded plastic support member 280 and 281. The lower member 281 forms the flat plate 240 that receives the bills from the drive roll 223 and supports the bills as they are driven past the scanheads 18a and 18b.

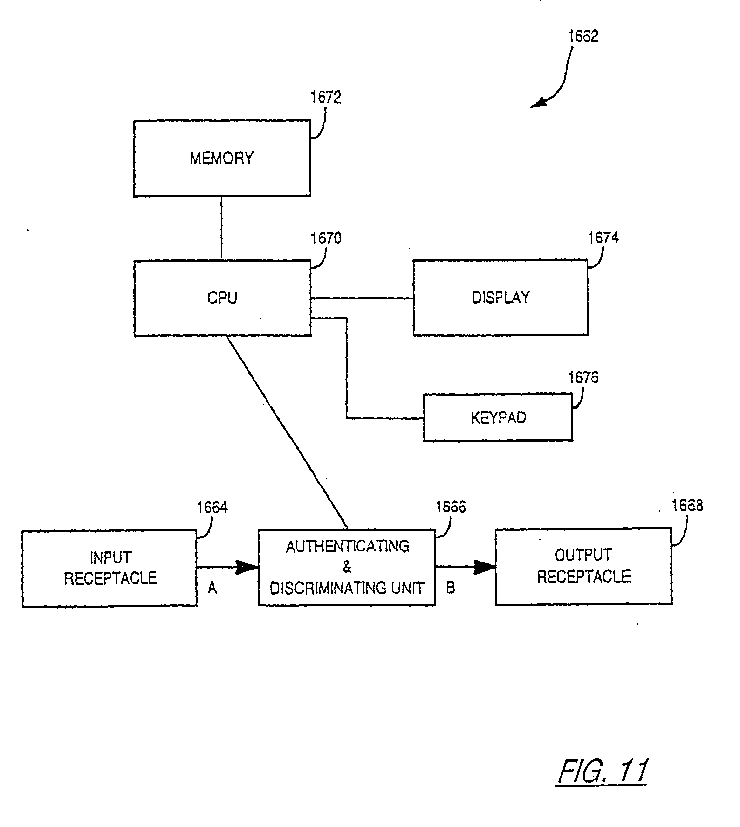

Each of the two optical scanheads 18a and 18b housed in the support members 280, 281 includes a pair of light sources acting in combination to uniformly illuminate strips of a desired dimension on opposite sides of a bill as it is transported across the flat guide plate 240. Thus, the upper scanhead 18a includes a pair of LEDs 22a directing light downwardly through an optical mask on top of a lens 282 onto a bill traversing the flat guide plate 240 beneath the scanhead 18a. Both LEDs 22a are angularly disposed relative to the vertical axis of the upper scanhead 18a so that their respective light beams combine to illuminate the desired light strip defined by an aperture in the mask. The scanhead 18a also includes a photodetector 26a mounted directly over the center of the illuminated strip for sensing the light reflected off the strip. The photodetector 26a is linked to a CPU 30 (See Fig. 11) through an analog-to-digital convertor (ADC) for processing the sensed data. Similarly, the lower scanhead 18b which includes a pair of LEDs 22b, a lens 283, and a photodetector 26b communicates with the CPU 30 through an ADC. The manner in which this data is processed is explained in detail in PCT patent application Serial No. PCT/US95/02992 which is incorporated herein by reference in its entirety.

The upper member 280 and lower member 281 are mounted facing each other so that the lenses 282 and 283 of the two scanheads 18a, 18b define a narrow gap through which each bill is transported. Generally, the gap is approximately 0.025 inch when the machine is in the operational mode. The upper support member 280 includes a tapered entry guide 280a which guides an incoming bill into the gap between the opposed lenses 282 and 283.

Doubling or overlapping of bills in the illustrative transport mechanism is detected by two additional photosensors which are located on a common transverse axis that is perpendicular to the direction of bill flow. The photosensors include photodetectors 293 and 294 mounted within the lower member 281 in immediate opposition to corresponding light sources 295 and 296 mounted in the upper member 280. The photodetectors 293, 294 detect beams of light directed downwardly onto the bill transport path from the light sources 295, 296 and generate analog outputs which correspond to the sensed light passing through the bill. Each such output is converted into a digital signal by a conventional ADC unit whose output is input to, and processed by, the CPU 30.

The presence of a bill adjacent the photosensors causes a change in the intensity of the detected light, and the corresponding changes in the analog outputs of the photodetectors 293 and 294 serve as a convenient means for density-based measurements for detecting the presence of "doubles" (two or more overlaid or overlapped bills) during the currency scanning process. For instance, the photodetectors 293, 294 may be used to collect a predefined number of density measurements on a test bill, and the average density value for a bill may be compared to predetermined density thresholds (based, for instance, on standardized density readings for master bills) to determine the presence of overlaid bills or doubles. Thus, this density detecting system ensures that no more than one bill is being scanned at a time.

Although the machine has been designed to greatly minimize the jamming of currency bills while being moved along the transport path, situations arise in which the machine will become jammed, especially in the area of the scanheads 18a, 18b. For example, an older currency bill which is not as "crisp" as a newer bill tends to buckle when its leading edge engages the guiding members within the transport path, especially in the region adjacent the sensing devices. As it begins to obstruct the transport path, the buckled bill in the transport path loses its velocity. The bills trailing the buckled bill then come into contact with the buckled bill and cause the transport path to become jammed. Additionally, currency bills with bent corners or a bill in the stack that is folded can catch on edges along the transport path as well. In any event, it is useful to have a simple means in which to clear a jam that may occur, especially beneath the upper member 280.

The lower member 281 is attached rigidly to the machine frame. However, the upper member 280 is slidably mounted on a pair of posts 285 and 286 on the machine frame thereby providing limited vertical movement. A pair of springs 287 and 288 bias the upper member 280 to its lowermost position in the operational mode. In one embodiment, a pair of handles 297 connected to upper member 280 are exposed once an access cover is opened. For example, removing the removable hopper 209 exposes the handles 297. Once exposed, the operator lifts the handles 297 by their gripping portion 298 and moves the connecting portion 299 over a structure rigidly affixed to the frame. An engagement surface 299a then engages the rigid structure to support the upper member 280. In FIG. 7b, the engagement surface 299a of each handle 297 is semi-circular and the structure to which it is connected is the shaft 221 which is also shown in Fig. 5. When positioned in this retracted position, the gap between the lenses 282 and 283 of the two scanheads 18a, 18b increases and is in the range from about 0.075 inch to about 0.20 inch.

Generally, the handles 297 are flexible to allow them to be deflected in a direction parallel to the direction a currency bill moves along the transport path. Thus, when attaching the handles 297 to and detaching them from the shaft 221 in FIGS. 7a and 7b, the operator can move the connecting portion 299 laterally across the shaft 221.

Alternatively, the upper member 280 can be locked into the retracted position by a brace member which engages the posts 285, 286. Small handles connected to the upper member 280 near the posts 285, 286 are grasped to lift the upper member 280. When in the retracted position, the rigid brace member attached to the frame or handles is positioned between the posts 285, 286 and a portion of the handles which acts against the springs 287, 288 and restrains the upper member 280 from returning to the operational position. In another alternative, small handles having a profile similar to the handle 297 in FIGS. 7a and 7b could latch onto rigid structures attached to the frame near the posts 285, 286.

In yet another alternative, the upper member 280 is separated from the lower member 281 without removing any access cover like the removable hopper 209. The operator moves a lever which is connected to one of the members 280, 281 and is exposed on the exterior of the machine. The movement of the lever then increases the gap between the two members 280, 281. For example, the lever is attached to a cam which when rotated forces the two members 280, 281 apart.

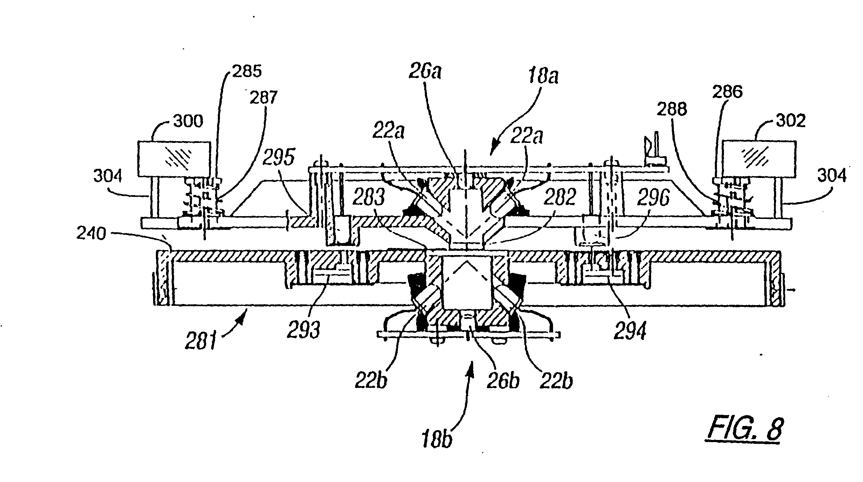

In yet a further alternative, the upper member 280 could be automatically converted between the operational position and the retracted position by use of a pair of solenoids 300, 302 as shown in Fig. 8. The solenoids 300, 302 are affixed onto the rigid frame near the posts 285, 286. Each solenoid 300, 302 has a displacing member 304 which attaches to the upper member 280. When energized, the displacing member 304 of the solenoids 300, 302 act against the force of the springs 286, 287 and move the upper member 280 from the operational position to the retracted position. Although the solenoids 300, 302 are shown attached to the upper member 280, they can also be attached to the lower member 281. In such an embodiment, the solenoids 300, 302 then push the upper member 280 away from the lower member 281 against the force of the springs 287, 288.

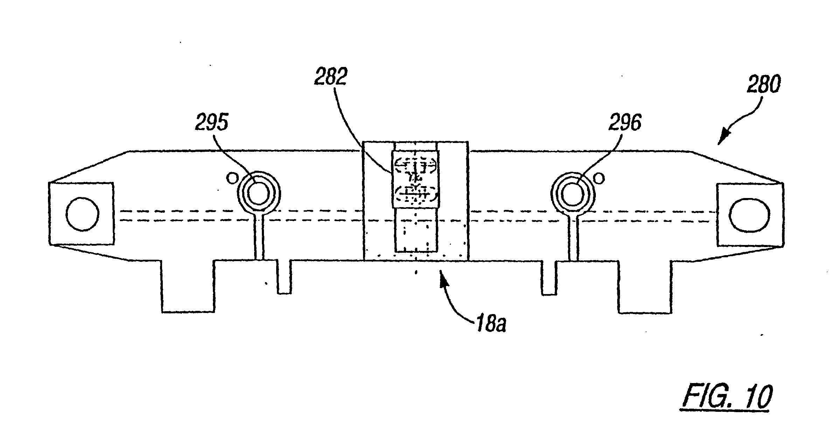

Fig. 9 shows a bottom plan view of the lower member 281 of the scanning device and the passive transport rolls 250, 251. Fig. 10 illustrates a bottom plan view of the upper member 280 including the upper scanhead 18. Both figures are applicable to the scanning device illustrated in Fig. 6 or 5.

Fig. 11 is a functional block diagram illustrating another embodiment of a currency discriminator system 1662 according to the present invention. The discriminator system 1662 comprises an input receptacle 1664 for receiving a stack of currency bills. A transport mechanism defining a transport path (as represented by arrows A and B) transports the bills in the input receptacle past one or more sensors of an authenticating and discriminating unit 1666 to an output receptacle 1668 where the bills are re-stacked such that each bill is stacked on top of or behind the previous bill so that the most recent bill is the top-most or rear-most bill. The authenticating and discriminating unit scans and determines the denomination of each passing bill. Any variety of discriminating techniques may be used. For example, the discriminating method disclosed in U.S. Pat. No. 5,295,196 (incorporated herein in its entirety) may be employed to optically scan each bill. Depending on the characteristics of the discriminating unit employed, the discriminator may be able to recognize bills only if fed face up or face down, regardless of whether fed face up or face down, only if fed in a forward orientation or reverse orientation, regardless of whether fed in a forward or reverse orientation, or some combination thereof. Additionally, the discriminating unit may be able to scan only one side or both sides of a bill. In addition to determining the denomination of each scanned bill, the authenticating and discriminating unit 1666 may additionally include various authenticating tests.

Signals from the authenticating and discriminating unit 1666 are sent to a signal processor such as a central processor unit ("CPU") 1670. The CPU 1670 records of results of the authenticating and discriminating tests in a memory 1672. When the authenticating and discriminating unit 1666 is able to confirm the genuineness and denomination of a bill, the value of the bill is added to a total value counter in memory 1672 that keeps track of the total value of the stack of bills that were inserted in the input receptacle 1664 and scanned by the authenticating and discriminating unit 1666. Additionally, depending on the mode of operation of the discriminator system 1662, counters associated with one or more denominations are maintained in the memory 1672. For example, a $1 counter may be maintained to record how many $1 bills were scanned by the authenticating and discriminating unit 1666. Likewise, a $5 counter may be maintained to record how many $5 bills were scanned, and so on. In an operating mode where individual denomination counters are maintained, the total value of the scanned bills may be determined without maintaining a separate total value counter. The total value of the scanned bills and/or the number of each individual denomination may be displayed on a display 1674 such as a monitor or LCD display.

As discussed above, a discriminating unit such as the authenticating and discriminating unit 1666 may not be able to identify the denomination of one or more bills in the stack of bills loaded into the input receptacle 1664. For example, if a bill is excessively worn or soiled or if the bill is torn a discriminating unit may not be able to identify the bill. Furthermore, some known discrimination methods do not have a high discrimination efficiency and thus are unable to identify bills which vary even somewhat from an "ideal" bill condition or which are even somewhat displaced by the transport mechanism relative to the scanning mechanism used to discriminate bills. Accordingly, such poorer performing discriminating units may yield a relatively large number of bills which are not identified. Alternatively, some discriminating units may be capable of identifying bills only when they are fed in a predetermined manner. For example, some discriminators may require a bill to be faced in a predetermined manner. Accordingly, when a bill is fed face down past a discriminating unit which can only identify bills fed face up, the discriminating unit can not identify the bill. Likewise, other discriminators require a specific edge of a bill to be fed first, for example, the top edge of a bill. Accordingly, bills which are not fed in the forward direction, that is, those that are fed in the reverse direction, are not identified by such a discriminating unit.

According to one embodiment, the discriminator system 1662 is designed so that when the authenticating and discriminating unit is unable to identify a bill, the transport mechanism is stopped so that the unidentified bill is the last bill transported to the output receptacle. After the transport mechanism stops, the unidentified bill is then, for example, positioned at the top of or at the rear of the stack of bills in the output receptacle 1668. The output receptacle 1668 is preferably positioned within the discriminator system 1662 so that the operator may conveniently see the flagged bill and/or remove it for closer inspection. Accordingly, the operator is able to easily see the bill which has not been identified by the authenticating and discriminating unit 1666. The operator may then either visually inspect the flagged bill while it is resting on the top of or at the rear of the stack, or alternatively, the operator may chose to remove the bill from the output receptacle in order to examine the flagged bill more closely. The discriminator system 1662 may be designed to continue operation automatically when a flagged bill is removed from the output receptacle or, according to one embodiment of the present invention, may be designed to require a selection element to be depressed. Upon examination of a flagged bill by the operator, it may be found that the flagged bill is genuine even though is was not identified by the discriminating unit. However, because the bill was not identified, the total value and/or denomination counters in the memory 1672 will not reflect its value. According to one embodiment, such an unidentified bill is removed from the output stack and either re-fed through the discriminator or set aside. In the latter case, any genuine set aside bills are counted by hand.

In some discriminators, unidentified bills are routed to a separate reject receptacle. In prior such systems, an unidentified genuine bill would have to be removed from a reject receptacle and re-fed through the discriminator or the stack of rejected bills would have to be counted by hand and the results separately recorded. Furthermore, because re-fed bills have gone unidentified once, they are more likely to go unidentified again and ultimately may have to be counted by hand. However, as discussed above, such procedures may increase the chance for human error or at least lower the efficiency of the discriminator and the operator.

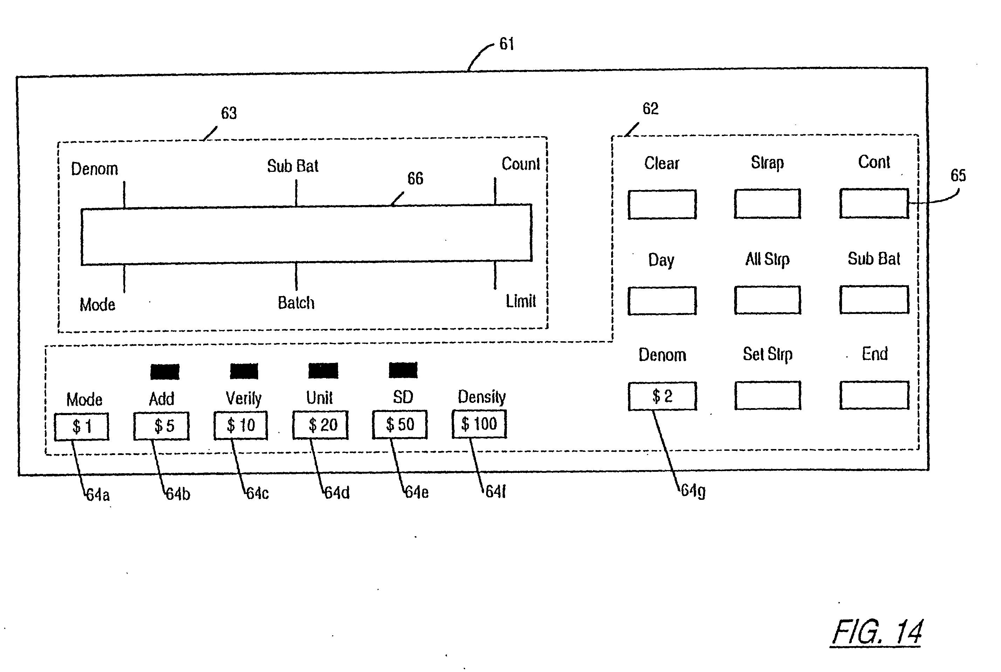

In order to avoid problems associated with re-feeding bills, counting bills by hand, and adding together separate totals, according to one embodiment of the present invention a number of selection elements associated with individual denominations are provided. In FIGs. 1 and 11, these selection elements are in the form of keys or buttons of a keypad 1676. Other types of selection elements such as switches or displayed keys in a touch-screen environment may be employed. The operation of the selection elements will be described in more detail in connection with Fig. 14 but briefly when an operator determines that a flagged bill is acceptable, the operator may simply depress the selection element associated with the denomination of the flagged bill and the corresponding denomination counter and/or the total value counter are appropriately incremented and the discriminator system 1662 or 10 resumes operating again. As discussed above, a bill may be flagged for any number of reasons including the bill being a no call or suspect bill. In non-automatic restart discriminators, where an operator has removed a genuine flagged bill from the output receptacle for closer examination, the bill is first replaced into the output receptacle before a corresponding selection element is chosen. An advantage of the above described procedure is that appropriate counters are incremented and the discriminator is restarted with the touch of a single key, greatly simplifying the operation of the discriminator system 1662 or 10 while reducing the opportunities for human error. When an operator determines that a flagged bill is not acceptable, the operator may remove the unacceptable flagged bill from the output receptacle without replacement and depress a continuation key on the keypad 1676 or 62. When the continuation key is selected the denomination counters and the total value counter are not affected and the discriminator system 1662 or 10 will resume operating again. In automatic restart discriminators, the removal of a bill from the output receptacle is treated as an indication that the bill is unacceptable and the discriminator automatically resumes operation without affecting the denomination counters and/or total value counters.

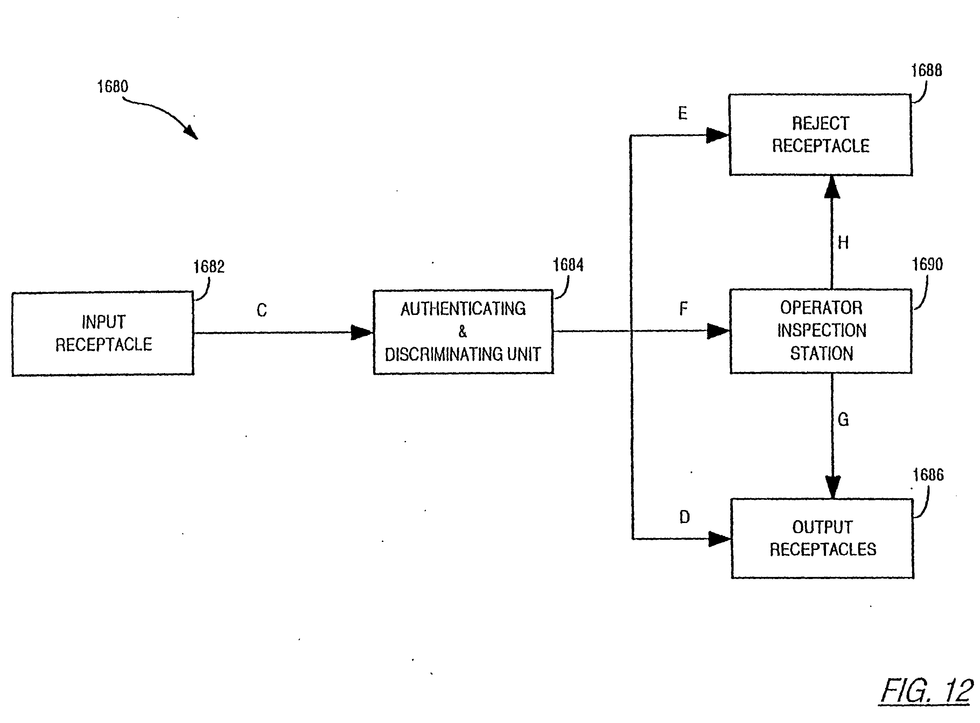

Turning now to Fig. 12, there is shown a functional block diagram illustrating another embodiment of a document authenticator and discriminator according to the present invention. The discriminator system 1680 comprises an input receptacle 1682 for receiving a stack of currency bills. A transport mechanism defining a transport path (as represented by arrow C) transports the bills in the input receptacle, one at a time, past one or more sensors of an authenticating and discriminating unit 1684. Based on the results of the authenticating and discriminating unit 1684, a bill is either transported to one of a plurality of output receptacles 1686 (arrow D), to a reject receptacle 1688 (arrow E), or to an operator inspection station 1690 (arrow F). When is bill is determined to be genuine and its denomination has been identified, the bill is transported to one of a plurality of output receptacles. For example, the discriminator system 1680 may comprise seven output receptacles 1686, one associated with each of seven U.S. denominations, i.e., $1, $2, $5, $10, $20, $50, and $100. The transport mechanism directs (arrow D) the identified bill to the corresponding output receptacle. Alternatively, where the authenticating and discriminating unit determines that a bill is a fake, the bill is immediately routed (arrow E) to the reject receptacle 1688. Finally, if a bill is not determined to be fake but for some reason the authenticating and discriminating unit 1684 is not able to identify the denomination of the bill, the flagged bill is routed (arrow F) to an inspection station and the discriminator system 1680 stops operating. The inspection station is preferably positioned within the discriminator system 1680 so that the operator may conveniently see the flagged bill and/or remove it for closer inspection. If the operator determines that the bill is acceptable, the operator returns the bill to the inspection station if it was removed and selects a selection element (not shown) corresponding to the denomination of the flagged bill. Appropriate counters (not shown) are incremented, the discriminator system 1680 resumes operation, and the flagged bill is routed (arrow G) to the output receptacle associated with the chosen selection element. On the other hand, if the operator determines that the flagged bill is unacceptable, the operator returns the bill to the inspection station if it was removed and selects a continuation element (not shown). The discriminator system 1680 resumes operation, and the flagged bill is routed (arrow H) to the reject receptacle 1688 without incrementing the counters associated with the various denomination and/or the total value counters. Alternatively, the discriminator system 1680 may permit the operator to place any unacceptable unidentified bills aside or into the reject receptacle by hand. While transport paths D and G and paths E and H are illustrated as separate paths, paths D and G and paths E and H, respectively, may be the same path so that all bills proceeding to either one of the output receptacles 1686 or the reject receptacle 1688, respectively, are routed through the inspection station 1690.

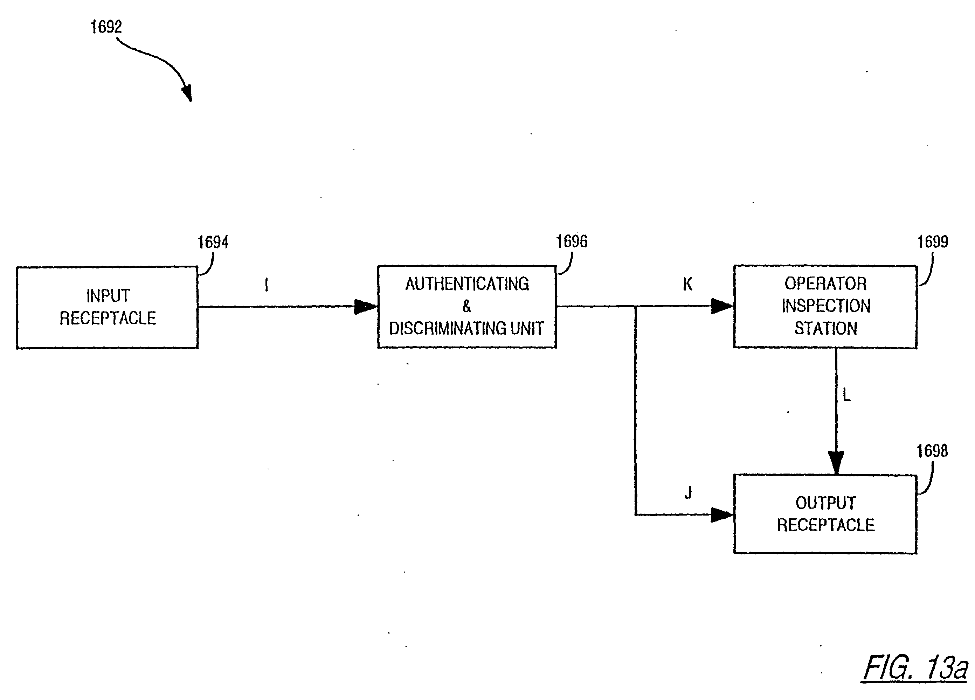

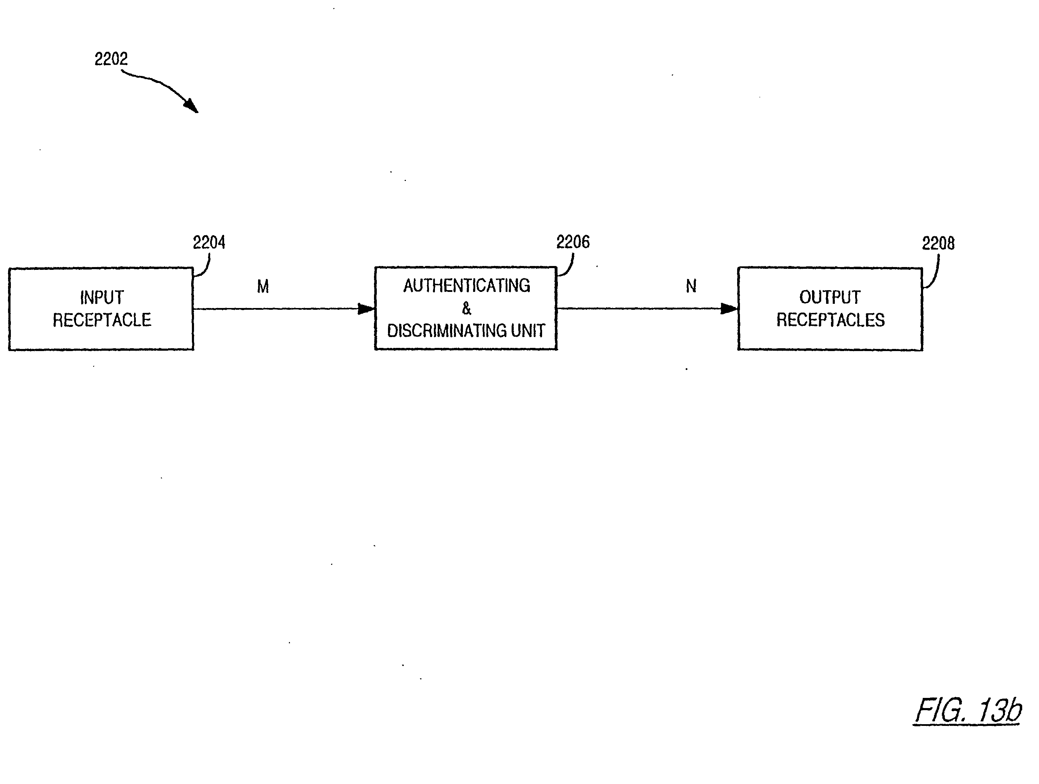

Turning now to Fig. 13a, there is shown a functional block diagram illustrating another embodiment of a document authenticator and discriminator according to the present invention. The discriminator system 1692 comprises an input receptacle 1694 for receiving a stack of currency bills. A transport mechanism (as represented by arrow I) transports the bills in the input receptacle, one at a time, past one or more sensors of an authenticating and discriminating unit 1696. Based on the results of the authenticating and discriminating unit 1684, a bill is either transported to a single output receptacle 1698 (arrow J) or to an operator inspection station 1699 (arrow K). When is bill is determined to be genuine and its denomination has been identified, the bill is transported to the single output receptacle. Alternatively, where the authenticating and discriminating unit determines that a bill is a fake or for some reason the authenticating and discriminating unit 1684 is not able to identify the denomination of the bill, the flagged bill is routed (arrow K) to an inspection station and the discriminator system 1692 stops operating. The inspection station is preferably positioned within the discriminator system 1692 so that the operator may conveniently see the flagged bill and/or remove it for closer inspection. Where a bill has been positively determined to be a fake by the authenticating and discriminating unit 1696, an appropriate indication, for example, via a message in a display or the illumination of a light, can be given to the operator as to the lack of genuineness of the bill. The operator may then remove the bill without replacement from the inspection station 1699 and select a continuation element. Where a bill has not been positively identified as a fake nor has had its denomination identified and where the operator determines that the bill is acceptable, the operator returns the bill to the inspection station if it was removed and selects a selection element (not shown) corresponding to the denomination of the flagged bill. Appropriate counters (not shown) are incremented, the discriminator system 1692 resumes operation, and the flagged bill is routed (arrow L) to the single output receptacle 1698. On the other hand, if the operator determines that the flagged bill is unacceptable, the operator removes the bill without replacement form the inspection station and selects a continuation element (not shown). The discriminator system 1692 resumes operation without incrementing the counters associated with the various denomination and/or the total value counters. While transport paths J and L are illustrated as separate paths, they may be the same path so that all bills proceeding to the single output receptacle 1698 are routed through the inspection station 1699.

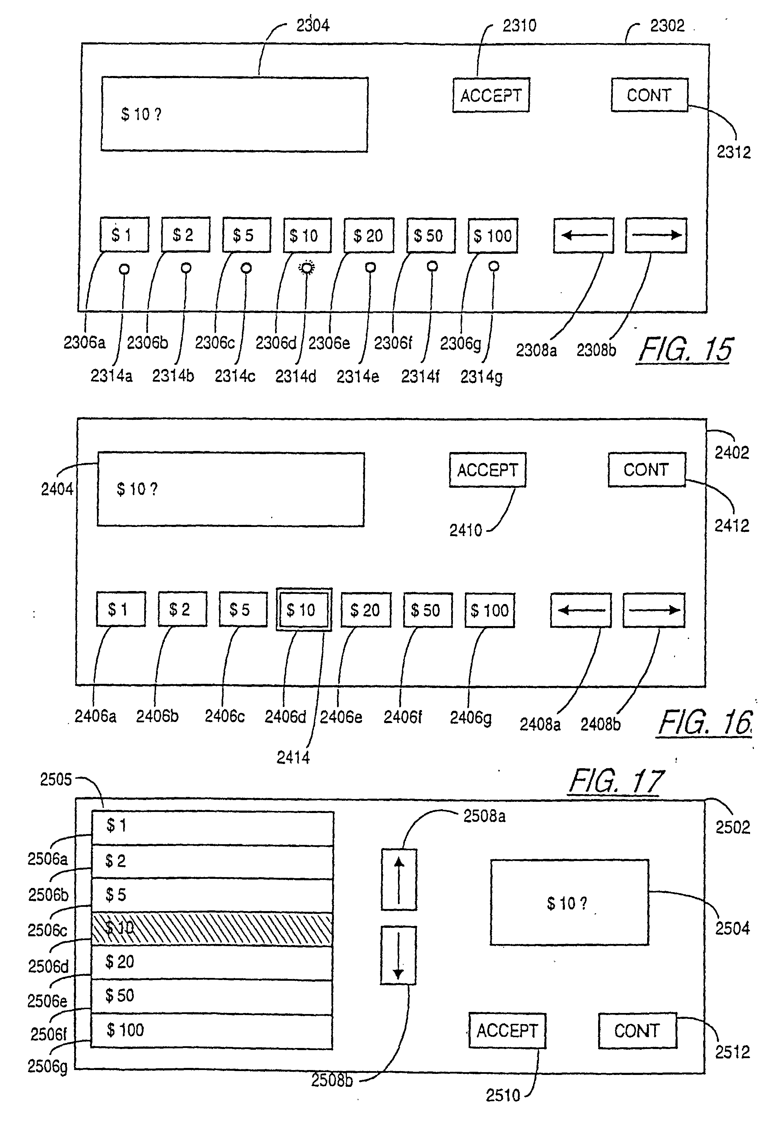

Turning now to Fig. 13b, there is shown a functional block diagram illustrating another embodiment of a document authenticator and discriminator according to the present invention. The discriminator system 2202 comprises an input receptacle 2204 for receiving a stack of currency bills. A transport mechanism defining a transport path (as represented by arrow M) transports the bills in the input receptacle, one at a time, past one or more sensors of an authenticating and discriminating unit 2206. Bills are then transported to one of a plurality of output receptacles 2208 (arrow N). In one embodiment, where the authenticating and discriminating unit determines that a bill is a fake, the flagged bill is routed to a separate one of said output receptacles. The operation of the discriminator may or may not then be suspended. When a bill is not determined to be fake but for some reason the authenticating and discriminating unit 1684 is not able to identify the denomination of the bill, the no call bill may be transported one of the output receptacles. In one embodiment, no call bills are transported to a separate one of the output receptacles. In another embodiment, no calls are not delivered to a special separate output receptacle. The operation of the discriminator may or may not then be suspended. For example, in a two output pocket discriminator, all bills may be transported to the same output receptacle regardless of whether they are determined to be suspect, no call, or properly identified. In this example, the operation of the discriminator may be suspended and an appropriate message displayed when a suspect or no call bill is encountered. Alternatively, suspect bills may be delivered to one of the output receptacles (i.e., a reject receptacle) and no calls and identified bills may be sent to the other output receptacle. In this example, the operation of the discriminator need not be suspended when a suspect bill is encountered but may be suspended when a no call bill is encountered. If the operation is suspended at the time the no call bill is detected and the operator determines that the no call bill is acceptable, the operator returns the bill to the output receptacle from which it was removed (if it was removed) and selects a selection element (not shown) corresponding to the denomination of the flagged bill. Appropriate counters (not shown) are incremented, the discriminator system 2202 resumes operation. On the other hand, if the operator determines that the flagged bill is unacceptable, the operator removes the bill without replacement form the output receptacle and selects a continuation element (not shown). The discriminator system 2202 resumes operation without incrementing the counters associated with the various denomination and/or the total value counters. In another embodiment, no call bills are delivered to an output receptacle separate from the one or more output receptacles receiving identified bills. The operation of the discriminator need not be suspended until all the bills placed in the input receptacle have been processed. The value of any no call bills may then be added to the appropriate counters after the stack of bills has been processed through a reconciliation process. The entering of the value of no call bills is discussed in more detail below in connection with FIGs. 15-20.

The operation of the selection elements according to one embodiment will now be described in more detail in conjunction with Fig. 14 which is a front view of a control panel 61 of one embodiment of the present invention. The control panel 61 comprises a keypad 62 and a display section 63. The keypad 62 comprises a plurality of keys including seven denomination selection elements 64a-64g, each associated with one of seven U.S. currency denominations, i.e., $1, $2, $5, $10, $20, $50, and $100. For foreign bill discriminators, the denomination selection elements may be labeled according to the currency system which a discriminator is designed to handle and accordingly, there may be more or less than seven denomination selection elements. The $1 denomination selection key 64a also serves as a mode selection key. The keypad 62 also comprises a "Continuation" selection element 65. Various information such as instructions, mode selection information, authentication and discrimination information, individual denomination counter values, and total batch counter value are communicated to the operator via an LCD 66 in the display section 63. A discriminator according to one embodiment of the present invention has a number of operating modes including a mixed mode, a stranger mode, a sort mode, a face mode, and a forward/reverse orientation mode. The operation of a discriminator having the denomination selection elements 64a-64g and the continuation element 65 will now be discussed in connection with several operating modes.

### (A) Mixed Mode

Mixed mode is designed to accept a stack of bills of mixed denomination, total the aggregate value of all the bills in the stack and display the aggregate value in the display 63. Information regarding the number of bills of each individual denomination in a stack may also be stored in denomination counters. When an otherwise acceptable bill remains unidentified after passing through the authenticating and discriminating unit, operation of the discriminator may be resumed and the corresponding denomination counter and/or the aggregate value counter may be appropriately incremented by selecting the denomination selection key 64a-64g associated with the denomination of the unidentified bill. For example, if the discriminator system 62 of Fig. 11 or 10 of FIG. 1 stops operation with an otherwise acceptable $5 bill being the last bill deposited in the output receptacle, the operator may simply select key 64b. When key 64b is depressed, the operation of the discriminator is resumed and the $5 denomination counter is incremented and/or the aggregate value counter is incremented by $5. Furthermore, in the discriminator systems 1680 of Fig. 12 and 1692 of Fig. 13, the flagged bill may be routed from the inspection station to an appropriate output receptacle. Otherwise, if the operator determines the flagged bill is unacceptable, the bill may be removed from the output receptacle of FIGs. 1 or 11 for the inspection station of FIGs. 12 and 13a (or in the system 1680 of Fig. 12, the flagged bill may be routed to the reject receptacle 1688). The continuation key 65 is depressed after the unacceptable bill is removed, and the discriminator resumes operation without affecting the total value counter and/or the individual denomination counters.

### (B) Stranger Mode

Stranger mode is designed to accommodate a stack of bills all having the same denomination, such as a stack of $10 bills. In such a mode, when a stack of bills is processed by the discriminator the denomination of the first bill in the stack is determined and subsequent bills are flagged if they are not of the same denomination. Alternatively, the discriminator may be designed to permit the operator to designate the denomination against which bills will be evaluated with those of a different denomination being flagged. Assuming the first bill in a stack determines the relevant denomination and assuming the fast bill is a $10 bill, then provided all the bills in the stack are $10 bills, the display 63 will indicate the aggregate value of the bills in the stack and/or the number of $10 bills in the stack. However, if a bill having a denomination other than $10 is included in the stack, the discriminator will stop operating with the non-$10 bill or "stranger bill" being the last bill deposited in the output receptacle in the case of the discriminator system 62 of Fig. 11 or 10 of FIG. I (or the inspection station of FIGs. 12 and 13a). The stranger bill may then be removed from the output receptacle and the discriminator is started again either automatically or by depression of the "Continuation" key 65 depending on the set up of the discriminator system. An unidentified but otherwise acceptable $10 bill may be handled in a manner similar to that described above in connection with the mixed mode, e.g., by depressing the $10 denomination selection element 64c, or alternatively, the unidentified but otherwise acceptable $10 bill may be removed from the output receptacle and placed into the input hopper to be re-scanned. Upon the completion of processing the entire stack, the display 63 will indicate the aggregate value of the $10 bills in the stack and/or the number of $10 bills in the stack. All bills having a denomination other than $10 will have been set aside and will not be included in the totals. Alternatively, these stranger bills can be included in the totals via operator selection choices. For example, if a $5 stranger bill is detected and flagged in a stack of $10 bills, the operator may be prompted via the display as to whether the $5 bill should be incorporated into the running totals. If the operator responds positively, the $5 bill is incorporated into appropriate running totals, otherwise it is not. Alternatively, when the discriminator stops on a stranger bill, such as a $5, the operator may depress the denomination selection element associated with that denomination to cause the value of the stranger bill to be incorporated into the totals. Likewise for other types of flagged bills such as no calls. Alternatively, a set-up selection may be chosen whereby all stranger bills are automatically incorporated into appropriate running totals.

### (C) Sort Mode

According to one embodiment, the sort mode is designed to accommodate a stack of bills wherein the bills are separated by denomination. For example, all the $1 bills may be placed at the beginning of the stack, followed by all the $5 bills, followed by all the $10 bills, etc. Alternatively, the sort mode may be used in conjunction with a stack of bills wherein the bills are mixed by denomination. The operation of the sort mode is similar to that of the stranger mode except that after stopping upon the detection of a different denomination bill, the discriminator is designed to resume operation upon removal of all bills from the output receptacle. Returning to the above example, assuming the first bill in a stack determines the relevant denomination and assuming the first bill is a $1 bill, then the discriminator processes the bills in the stack until the first non-$1 bill is detected, which in this example is the first $5 bill. At that point, the discriminator will stop operating with the first $5 being the last bill deposited in the output receptacle. The display 63 may be designed to indicate the aggregate value of the preceding $1 bills processed and/or the number of preceding $1 bills. The scanned $1 bills and the first $5 bill are removed from the output receptacle and placed in separate $1 and $5 bill stacks. The discriminator will start again automatically and subsequent bills will be assessed relative to being $5 bills. The discriminator continues processing bills until the first $10 bill is encountered. The above procedure is repeated and the discriminator resumes operation until encountering the first bill which is not a $10 bill, and so on. Upon the completion of processing the entire stack, the display 63 will indicate the aggregate value of all the bills in the stack and/or the number of bills of each denomination in the stack. This mode permits the operator to separate a stack of bills having multiple denominations into separate stacks according to denomination.

### (D) Face Mode

Face mode is designed to accommodate a stack of bills all faced in the same direction, e.g., all placed in the input hopper face up (that is the portrait or black side up for U.S. bills) and to detect any bills facing the opposite direction. In such a mode, when a stack of bills is processed by the discriminator, the face orientation of the first bill in the stack is determined and subsequent bills are flagged if they do not have the same face orientation. Alternatively, the discriminator may be designed to permit designation of the face orientation to which bills will be evaluated with those having a different face orientation being flagged. Assuming the first bill in a stack determines the relevant face orientation and assuming the first bill is face up, then provided all the bills in the stack are face up, the display 63 will indicate the aggregate value of the bills in the stack and/or the number of bills of each denomination in the stack. However, if a bill faced in the opposite direction (i.e., face down in this example) is included in the stack, the discriminator will stop operating with the reverse-faced bill being the last bill deposited in the output receptacle. The reverse-faced bill then may be removed from the output receptacle. In automatic re-start embodiments, the removal of the reverse-faced bill causes the discriminator to continue operating. The removed bill may then be placed into the input receptacle with the proper face orientation. Alternatively, in non-automatic restart embodiments, the reverse-faced bill may be either placed into the input receptacle with the proper face orientation and the continuation key 65 depressed, or placed back into the output receptacle with the proper face orientation. Depending on the set up of the discriminator when a bill is placed back into the output receptacle with the proper face orientation, the denomination selection key associated with the reverse-faced bill may be selected, whereby the associated denomination counter and/or aggregate value counter are appropriately incremented and the discriminator resumes operation. Alternatively, in embodiments wherein the discriminator is capable of determining denomination regardless of face orientation, the continuation key 65 or a third key may be depressed whereby the discriminator resumes operation and the appropriate denomination counter and/or total value counter is incremented in accordance with the denomination identified by the discriminating unit. In discriminators that require a specific face orientation, any reverse-faced bills will be unidentified bills. In discriminators that can accept a bill regardless of face orientation, reverse-faced bills may be properly identified. The later type of discriminator may have a discriminating unit with a scanhead on each side of the transport path. Examples of such dual-sided discriminators are disclosed above (see e.g., FIGs. 2, 5, and 6. The ability to detect and correct for reverse-faced bills is important as the Federal Reserve requires currency it receives to be faced in the same direction.

In a multi-output receptacle discriminator, the face mode may be used to route all bills facing upward to one output receptacle and all bills facing downward to another output receptacle. In single-sided discriminators, reverse-faced bills may be routed to an inspection station such as 1690 of Fig. 12 for manual turnover by the operator and the unidentified reverse-faced bills may then be passed by the discriminator again. In dual-sided discriminators, identified reverse-faced bills may be routed directly to an appropriate output receptacle, For example, in dual-sided discriminators bills may be sorted both by face orientation and by denomination, e.g., face up $1 bills into pocket #1, face down $1 bills into pocket #2, face up $5 bills into pocket #3, and so on or simply by denomination, regardless of face orientation, e.g., all $1 bills into pocket #1 regardless of face orientation, all $2 bills into pocket #2, etc.

### (E) Forward/Reverse Orientation Mode

Forward/Reverse Orientation mode ("Orientation" mode) is designed to accommodate a stack of bills all oriented in a predetermined forward or reverse orientation direction. For example in a discriminator that feeds bills along their narrow dimension, the forward direction may be defined as the fed direction whereby the top edge of a bill is fed first and conversely for the reverse direction. In a discriminator that feeds bills along their long dimension, the forward direction may be defined as the fed direction whereby the left edge of a bill is fed first and conversely for the reverse direction. In such a mode, when a stack of bills is processed by the discriminator, the forward/reverse orientation of the first bill in the stack is determined and subsequent bills are flagged if they do not have the same forward/reverse orientation. Alternatively, the discriminator may be designed to permit the operator to designate the forward/reverse orientation against which bills will be evaluated with those having a different forward/reverse orientation being flagged. Assuming the first bill in a stack determines the relevant forward/reverse orientation and assuming the first bill is fed in the forward direction, then provided all the bills in the stack are also fed in the forward direction, the display 63 will indicate the aggregate value of the bills in the stack and/or the number of bills of each denomination in the stack. However, if a bill having the opposite forward/reverse orientation is included in the stack, the discriminator will stop operating with the opposite forward/reverse oriented bill being the last bill deposited in the output receptacle. The opposite forward/reverse oriented bill then may be removed from the output receptacle. In automatic re-start embodiments, the removal of the opposite forward/reverse oriented bill causes the discriminator to continue operating. The removed bill may then be placed into the input receptacle with the proper face orientation. Alternatively, in non-automatic re-start embodiments, the opposite forward/reverse oriented bill may be either placed into the input receptacle with the proper forward/reverse orientation and the continuation key 65 depressed, or placed back into the output receptacle with the proper forward/reverse orientation. Depending on the set up of the discriminator when a bill is placed back into the output receptacle with the proper forward/reverse orientation, the denomination selection key associated with the opposite forward/reverse oriented bill may be selected, whereby the associated denomination counter and/or aggregate value counter are appropriately incremented and the discriminator resumes operation. Alternatively, in embodiments wherein the discriminator is capable of determining denomination regardless of forward/reverse orientation, the continuation key 65 or a the third key may be depressed whereby the discriminator resumes operation and the appropriate denomination counter and/or total value counter is incremented in accordance with the denomination identified by the discriminating unit. In single-direction discriminators, any reverse-oriented bills will be unidentified bills. In dual-direction discriminators, reverse-oriented bills may be properly identified by the discriminating unit. An example of a dual-direction discriminating system is described above connection with FIGs. 1-2 and in United States Pat. No. 5,295,196. The ability to detect and correct for reverse-oriented bills is important as the Federal Reserve may soon require currency it receives to be oriented in the same forward/reverse direction.

In a multi-output receptacle discriminator, the orientation mode may be used to route all bills oriented in the forward direction to one output receptacle and all bills oriented in the reverse direction to another output receptacle. In single-direction discriminators, reverse-oriented bills may be routed to an inspection station such as 1690 of Fig. 12 for manual turnover by the operator and the unidentified reverse-oriented bills may then be passed by the discriminator again. In discriminators capable of identifying bills fed in both forward and reverse directions ("dual-direction discriminators "), identified reverse-oriented bills may be routed directly to an appropriate output receptacle. For example, in dual-direction discriminators bills may be sorted both by forward/reverse orientation and by denomination, e.g., forward $1 bills into pocket #1, reverse $1 bills into pocket #2, forward $5 bills into pocket #3, and so on or simply by denomination, regardless of forward/reverse orientation, e.g., all $1 bills into pocket #1 regardless of forward/reverse orientation, all $2 bills into pocket #2, etc.

In an alternative embodiment, instead of halting the device with the flagged bill being the last bill output to the output receptacle, the device may halt with the flagged bill being at an identifiable location, *e.g.,* the second to last bill output to the output receptacle, and the display may indicate the location of the flagged bill, *e*.*g*., "denomination changed with second to the last bill in the output bin."

### Suspect Mode

In addition to the above modes, a suspect mode may be activated in connection with these modes whereby one or more authentication tests may be performed on the bills in a stack. When a bill fails an authentication test, the discriminator will stop with the failing or suspect bill being the last bill transported to the output receptacle. The suspect bill then may be removed from the output receptacle and set aside.

Likewise, one or more of the above described modes may be activated at the same time. For example, the face mode and the forward/reverse orientation mode may be activated at the same time. In such a case, bills that are either reverse-faced or opposite forward/reverse oriented will be flagged.

According to one embodiment, when a bill is flagged, for example, by stopping the transport motor with the flagged bill being the last bill deposited in the output receptacle, the discriminating device indicates to the operator why the bill was flagged. This indication may be accomplished by, for example, lighting an appropriate light, generating an appropriate sound, and/or displaying an appropriate message in the display section 63 (Fig. 14). Such indication might include, for example, "no call", "stranger", "failed magnetic test", "failed UV test", "no security thread", etc.

Means for entering the value of no call bills were discussed above in connection with Fig. 14 and the operating modes discussed above. Now several additional means will be discussed in connection with FIGs. 15-20 Fig. 15 is a front view of a control panel 2302 similar to that of Fig. 14. The control panel 2302 comprises a display area 2304, several denomination selection elements 2306a-g in the form of keys, left and right scroll keys 2308a-b, an accept selection element 2310, and a continuation selection element 2312. Each denomination selection element 2306a-g has a prompting means associated therewith. In Fig. 15, the prompting means are in the form of small lights or lamps 2314a-g such as LEDs. In Fig. 15, the light 2314d associated with the $10 denomination key 2306d is illuminated so as to prompt the operator that a denomination of $10 is being suggested. Alternatively, instead of the lamps 2314a-g being separate from the denomination keys 2306a-g, the denomination keys could be in the form of illuminable keys whereby one of the keys 2306a-g would light up to suggest its corresponding denomination to the operator. In place of, or in addition to, the illuminable lights 2314a-g or keys, the display area 2304 may contain a message to prompt or suggest a denomination to the operator. In Fig. 15, the display area 2304 contains the message "$10? " to suggest the denomination of $10. In the embodiment of Fig. 14, the display area 63 may be used to suggest a denomination to the operator without the need of illuminable lights and keys.

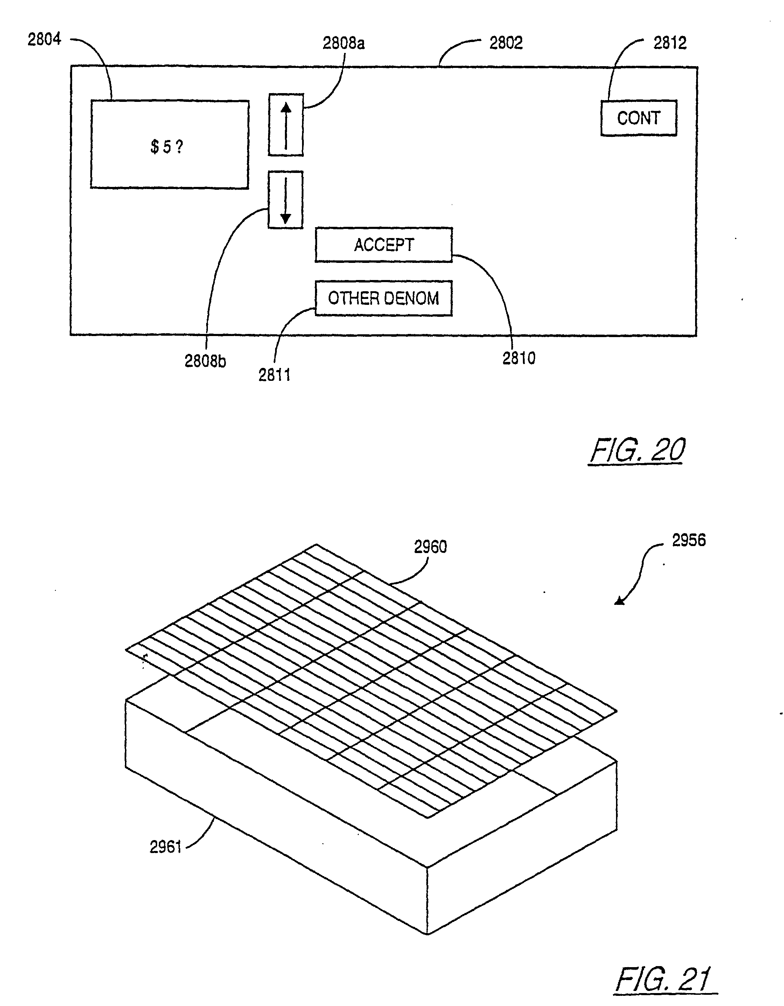

The control panel 2402 of Fig. 16 is similar to the control panel 2302 of Fig. 15; however, the denomination selection elements 2406a-g, scroll keys 2408a-b, accept key 2410, and continuation key 2412 are displayed keys in a touch-screen environment. To select any given key, the operator touches the screen in the area of the key to be selected. The operation of a touch screen is described in more detail in connection with Fig. 21. The discriminator may contain prompting means to suggest a denomination to the operator. For example, an appropriate message may be displayed in a display area 2404. Alternatively, or additionally, the prompting means may include means for highlighting one of the denomination selection elements 2406a-g. For example, the appearance of one of the denomination selection elements may be altered such as by making it lighter or darker than the remaining denomination selection elements or reversing the video display (e.g., making light portions dark and making the dark portions light or swapping the background and foreground colors). Alternatively, a designated denomination selection element may be highlighted by surrounding it with a box, such as box 2414 surrounding the $10 key 2406d.

Another embodiment of a control panel 2502 is depicted in Fig. 17. The control panel 2502 has several denomination indicating elements 2506a-g in the form of menu list 2505, scroll keys 2508a-b, an accept selection element 2510, and a continuation selection element 2512. The various selection elements may be, for example, physical keys or displayed keys in a touch screen environment. For example, the menu list 2505 may be displayed in a non-touch screen activated display area while the scroll keys 2508a-b, accept key 2510, and continuation key 2512 may be physical keys or displayed touch screen keys. In such an environment a user may accept a denominational selection by pressing the accept key 2510 when the desired denomination indicating element is highlighted and may use the scroll keys 2508a-b to vary the denomination indicating element that is highlighted. Alternatively, the denomination indicating elements 2506a-g may themselves be selection elements such as by being displayed touch screen active keys. In such an embodiment a given denomination element may be made to be highlighted and/or selected by touching the screen in the area of one of the denomination selection elements 2506a-g. The touching of the screen in the area of one of the denomination selection elements may simply cause the associated denomination selection element to become highlighted requiring the touching and/or pressing of the accept key 2510 or alternatively may constitute acceptance of the associated denomination selection element without requiring the separate selection of the accept key 2510. The discriminator may contain prompting means to suggest a denomination to the operator. For example, an appropriate message may be displayed in a display area 2504. Alternatively, or additionally, the prompting means may include means for highlighting one of the denomination indicating elements 2506a-g. For example, the appearance of one of the denomination indicating elements may be altered such as by making it lighter or darker than the remaining denomination indicating elements or by reversing the video display (e.g., making light portions dark and making the dark portions light or swapping the background and foreground colors). In Fig. 17, the hash marks are used to symbolize the alternating of the display of the $10 denomination indicating element 2506d relative to the other denomination indicating elements such as by using a reverse video display.

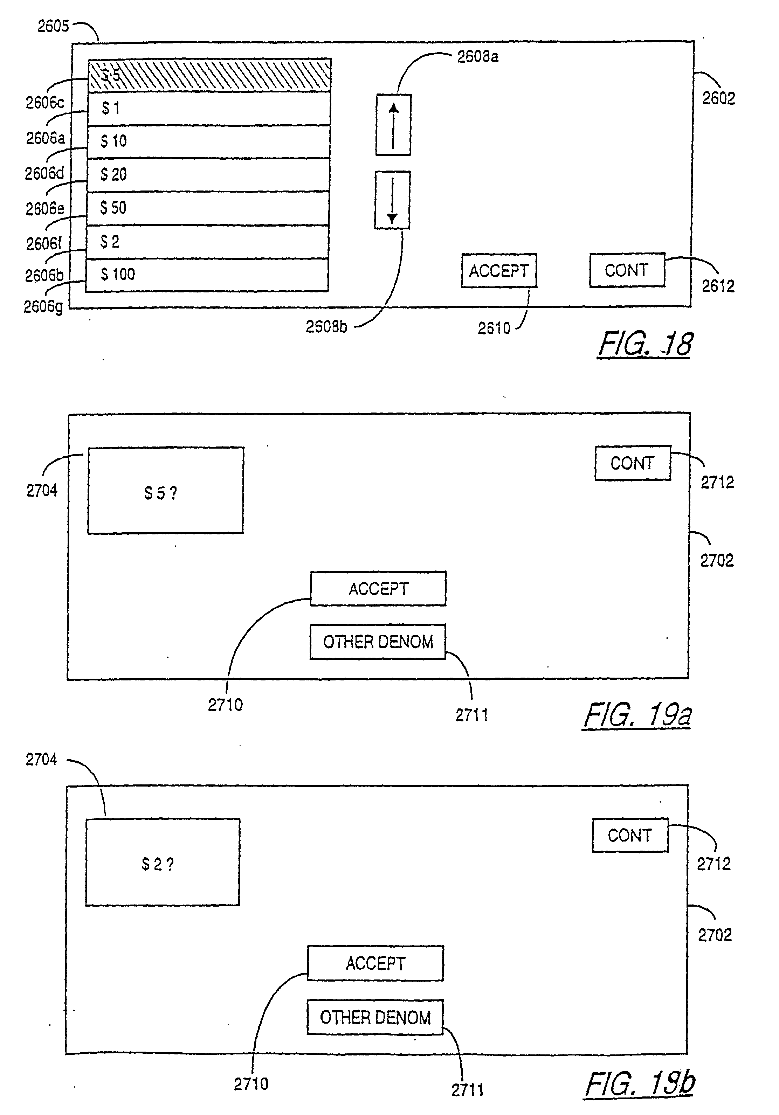

Control panel 2602 of Fig. 18 is similar to control panel 2502 of Fig. 17, however, the control panel 2602 does not have a separate display area. Additionally, the order of the denomination indicating elements 2606a-g of menu list 2605 is varied relative to those of menu list 2505. The order of the denomination selection element may be user-defined (i.e., the operator may preset the order in which the denominations should be listed) or may be determined by the discriminator and be, for example, based on the historical occurrence of no calls of each denomination, based on the denomination of the most recently detected no call, based on calculated correlation values for a given no call bill, or perhaps based on random selection. Such criteria will be described in more detail below.

The control panel 2702 of FIGs. 19a and 19b comprises a display area 2704, an accept key 2710, a next or other denomination key 2711, and a continuation key 2712. Alternatively, the accept key may be designated a "YES" key while the other denomination key may be designated a "NO" key. These keys may be physical keys or displayed keys. The discriminator prompts or suggest a denomination by displaying an appropriate message in the display area 2704. If the operator wishes to accept this denomination suggestion, the accept key 2710 may be selected. If other the operator wishes to select a different denomination, the other denomination key 2711 may be selected. If in the example given in FIG. 19a the operator wishes to select a denomination other than the $5 prompted in the display area 2704, the other denomination key 2711 may be selected which results in prompting of a different denomination, e.g., $2 as shown in FIG. 19b. The "OTHER DENOM" key 2711 may be repeatedly selected to scroll through the different denominations

The control panel 2802 of Fig. 20 is similar to that of FIGs. 19a-b and additionally comprises scroll keys 2808a-b. These scroll keys 2808a-b may be provided in addition to or in place of the other denomination key 2811. The order in which denominations are suggested to an operator, for example, in FIGs. 19 and 20, may be based on a variety of criteria as will be discussed below such as user-defined criteria or order, historical information, previous bill denomination, correlation values, or previous no call information.

Now several embodiments of the operation of discriminators embodying control panels such as those of FIGs. 14 and 15-20 will be discussed. In particular, several methods for reconciling the value of no call bills will be discussed in connection with these control panels. As discussed above, for example, in connection with the several previously described operating modes, when a discriminator encounters a no call bill, that is, when a discriminator is unable to determine or call the denomination of a bill, any counters keeping track of the number or value of each denomination of bills or of the total value of the bills processed will not include the no call bill. Traditionally, any no calls bills had to be set aside and manually counted by hand with the operator being required to add their values to the totals provided by the discriminator. As discussed above, this can lead to errors and reduced efficiency. To counter this problem, according to an embodiment of the present invention, means are provided for incorporating the value of no call bills. In single pocket discriminators, reconciliation may be accomplished on-the-fly with the discriminator suspending operation when each no call is encountered, prompting the operator to enter the value of the no call, and then resuming operation. In multi-output pocket discriminators, no call bills may be reconciled either on-the-fly or after the completion of processing all the bills placed in the input hopper or after completion of processing some other designated batch of bills. Under the first approach, the operation of the discriminator is suspended when each no call bill is detected with or without the no call bill being routed to a special location. The operator is then prompted to enter the value of the no call where upon the discriminator resumes operation. Based on the value indicated by the operator, appropriate counters are augmented. Under the second approach, any no call bills are routed to a special location while the discriminator continues processing subsequent bills. When all the bills have been processed, the operator is prompted to reconcile the values of any intervening no call bills. For example, assume a stack of fifty bills is placed in the input hopper and processed with four no calls being routed to a separate output receptacle from the receptacle or receptacles into which the bills whose denominations have been determined. After all fifty bills have been processed, the operation of the transport mechanism is halted and the operator is prompted to reconcile the value of the four no call bills. The methods for reconciling these four no calls will be discussed below after describing several denomination indicating and/or prompting means and methods. Alternatively, instead of waiting until all the bills in the stack have been processed, the discriminator may prompt the operator to reconcile the value of any no call bills while the remaining bills are still being processed. When the operator indicates the denominations of the no call bills, appropriate counters are augmented to reflect the value of the no call bills.

Several embodiments of means for permitting the operator to indicate the value of a flagged bill such as a no call and/or for prompting the operator as to the value of a flagged bill such as a no call will now be discussed. A first method was discussed above in connection with several operating modes and in connection with Fig. 14. According to one embodiment, the control panel of Fig. 14 comprises denomination indicating means in the form of the denomination selection elements 64a-g for permitting the operator to indicate the denomination of a bill but does not additionally comprise means for prompting the operator as to the denomination of a particular bill. Under this method, the operator examines a no call bill. If the bill is acceptable, the operator selects the denomination selection element associated with the denomination of the no call bill and the appropriate counters are augmented to reflect the value of the no call bill. For example, if the operator determines a no call bill is an acceptable $10 bill, the operator may press the $10 selection element 64c of Fig. 14. If the operation of the discriminator had been suspended, the selection of a denomination selection causes the operation of the discriminator to resume. In a on-the-fly reconciliating machine (i.e., one that suspends operation upon detection of each no call bill), if the operator determines that a particular no call bill is unacceptable, a continuation selection element may be selected to cause the discriminator to resume operation without negatively affecting the status of any counters. Under this approach, the denomination selection elements provide the operator with means for indicating the value of a no call bill. In FIGs. 15-20, additional examples of means for indicating the value of no call bills are provided. For example, in FIGs. 15-18, according to one embodiment, a denomination may be indicated in a similar manner by pressing one of the denomination selection elements. Alternatively, or additionally, a denomination may be indicated by selecting one of the denomination selection elements and selecting an accept key. Another example of a method of indicating a particular denomination selection element would be by utilizing one or more scroll keys. The selection of a denomination selection element may be indicated by, for example, the lights 2314 of Fig. 15, or by highlighting a particular selection element as in FIGs. 16-18. Alternatively a displayed message, as in FIGs. 15-17, 19, and 20, may be used to indicate which denomination is currently selected. The scroll keys could be used to alter which denomination is presently selected, for example, by altering which light 2314 is illuminated, which selection element is highlighted, or which denomination appears in the displayed message. Selection of an accept key while a particular denomination is selected may be used to indicate the selected denomination to the discriminator.

In addition to means for permitting the operator to indicate the denomination of one or more no calls, a discriminator may be provided with one or more means of prompting the operator as to the denomination of a no call bill. These means can be the means used to indicate which denomination is currently selected, e.g., the lights 2314 of Fig. 15, the highlighting of FIGs. 16-18, and/or the displayed message of FIGs. 15-17, 19, and 20. Several methods that may be employed in prompting the operator to enter the value of one or more no call bills will now be discussed.

A discriminator containing means for prompting an operator as to the value of a no call bill may base its selection of the denomination to be prompted to the operator on a variety of criteria. According to one embodiment, default denomination or sequence of denominations may be employed to prompt a denomination to an operator. For example, the discriminator may begin by prompting the lowest denomination, e.g., $1. Alternatively, the operator may begin by prompting the operator with the first denomination in a pre-defined sequence or on a menu list. The order of the denominations in the sequence or on the menu list may be a default order, e.g., increasing or decreasing denominational order, user-defined order, manufacturer-defined order.

According to another embodiment, a denomination to be prompted to the operator is determined on a random basis. The discriminator simply randomly or pseudo-randomly chooses one of a plurality of denominations and suggests this denomination to the operator. The denomination prompted to an operator may remain the same for all no call bills or alternatively, a new randomly selected denomination may be chosen for each no call encountered. If the operator agrees that a given no call bill is of the denomination suggested by the prompting means and finds the particular no call bill to be acceptable, the operator may simply choose the accept element or the corresponding denomination selection element depending on the embodiment of the control panel employed. If the operator finds a particular bill to be acceptable but does not have the suggested denomination, the operator may alter the denomination that is selected by, for example, altering the displayed suggested denomination by using the scroll keys, scrolling among the plurality of denomination selection and/or indicating elements, or directly selecting the appropriate denomination by pressing or touching the appropriate denomination selection element. If the operator fords that a no call bill is not acceptable, the operator may simply select a continuation key.

According to another embodiment, a denomination to be prompted to the operator is determined on the basis of the denomination of the last bill that was identified by the discriminator. For example, suppose the tenth bill in a stack was determined by the discriminator to be a $10, the eleventh bill was a no call and indicated by the operator to be a $5 bill, and the twelfth was a no call bill. According to this embodiment, the discriminator would suggest to the operator that the twelfth bill is a $10 bill. The operator may accept this suggestion or alter the suggested denomination as described above.

According to another embodiment, a denomination to be prompted to the operator is determined on the basis of the denomination of the last no call bill as indicated by the operator. For example, suppose the tenth bill was a no call and indicated by the operator to be a $5 bill, the eleventh bill in a stack was determined by the discriminator to be a $10, and the twelfth was a no call bill. According to this embodiment, the discriminator would suggest to the operator that the twelfth bill is a $5 bill. The operator may accept this suggestion or alter the suggested denomination as described above.

According to another embodiment, a denomination to be prompted to the operator is determined on the basis of the denomination of the immediately preceding bill, regardless of whether the denomination of that bill was determined by the discriminator or was indicated by the operator. For example, suppose the tenth bill in a stack was determined by the discriminator to be a $10, the eleventh bill was a no call and indicated by the operator to be a $5 bill, and the twelfth was also a no call bill. According to this embodiment, the discriminator would suggest to the operator that the twelfth bill is a $5 bill. The operator may accept this suggestion or alter the suggested denomination as described above.

According to another embodiment, a denomination to be prompted to the operator is determined on the basis of historical information concerning no call bills such as statistical information regarding previous no call bills. For example, suppose that for a given discriminator 180 no calls had been encountered since the discriminator was placed in service. According to this embodiment, information regarding these no calls is stored in memory. Assume that of these 180 no call bills, 100 were indicated by the operator to be $55, 50 were $10s, and the remaining 30 were $20s. According to this embodiment, the discriminator would suggest to the operator that a no call bill was a $5. The operator may accept this suggestion or alter the suggested denomination as described above. Variations on the data which constitute the historical basis may be made. For example, the historical basis according to this embodiment may be all no calls encountered since a given machine was place in service as in the above example, the last predetermined number of no calls detected, e.g., the last 100 no calls detected, or the last predetermined number of bills processed, e.g., the no calls encountered in the last 1000 bills processed. Alternatively, the historical basis may be set by the manufacturer based on historical data retrieved from a number of discriminators.

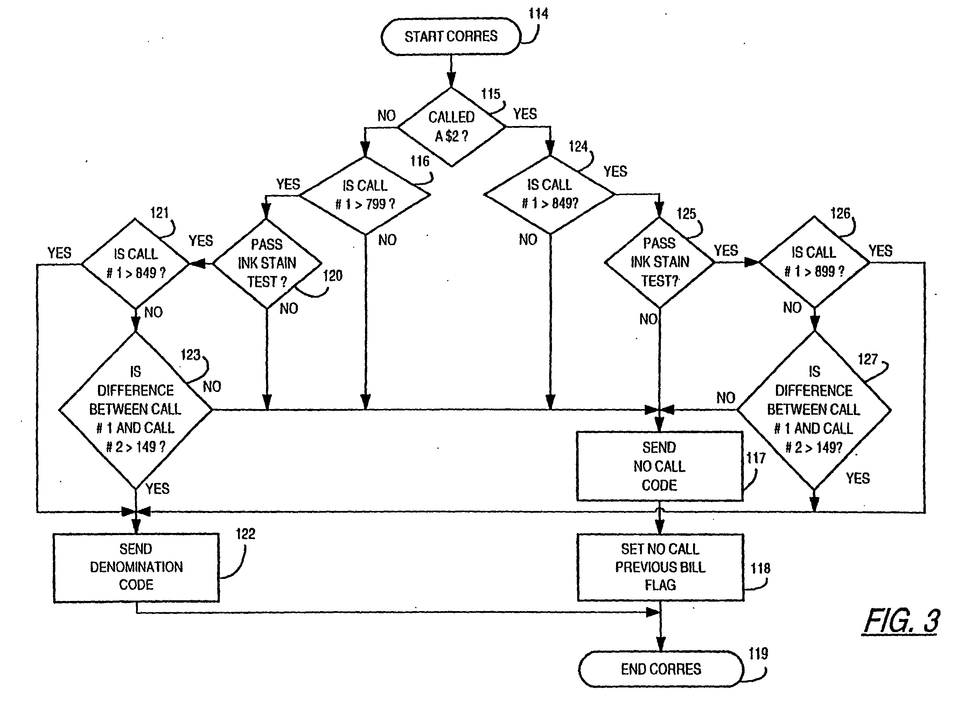

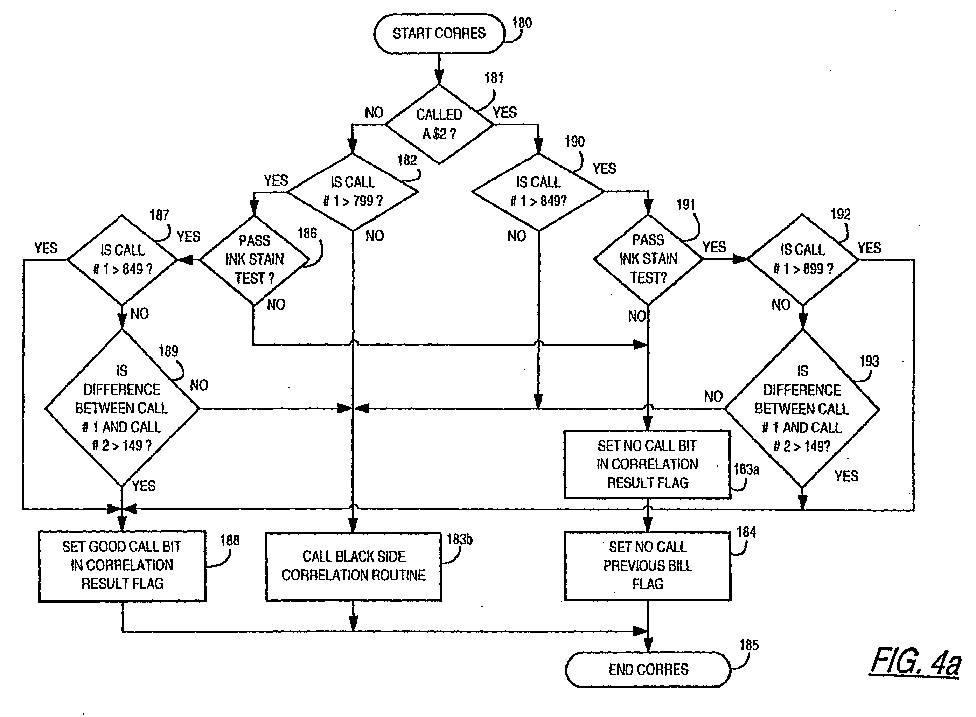

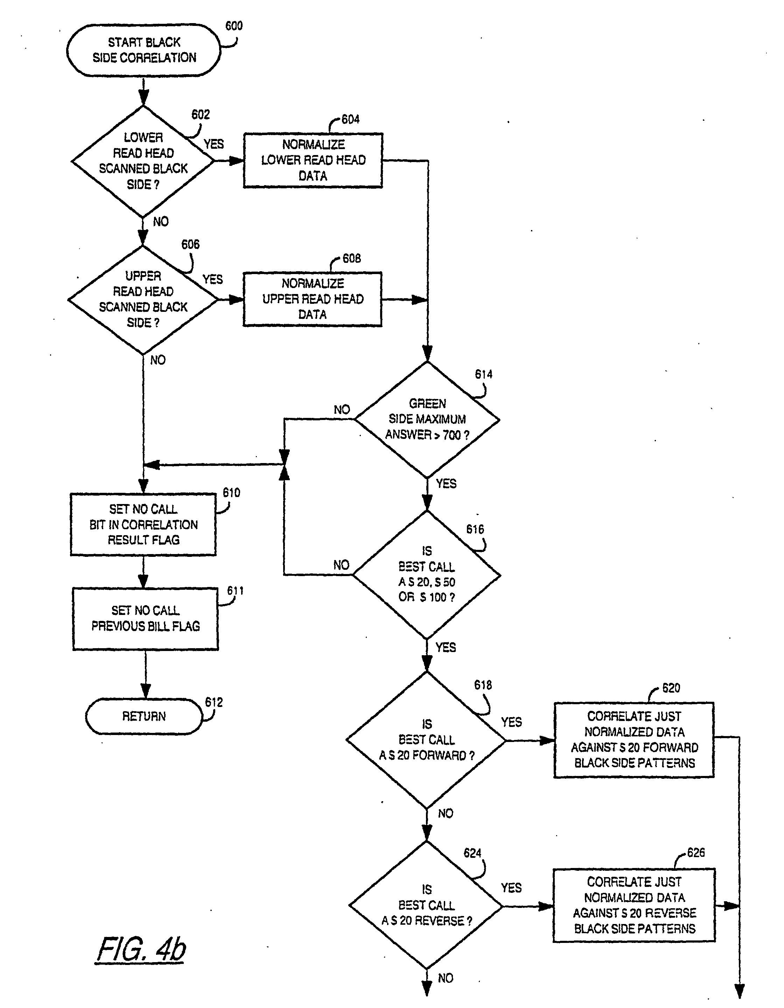

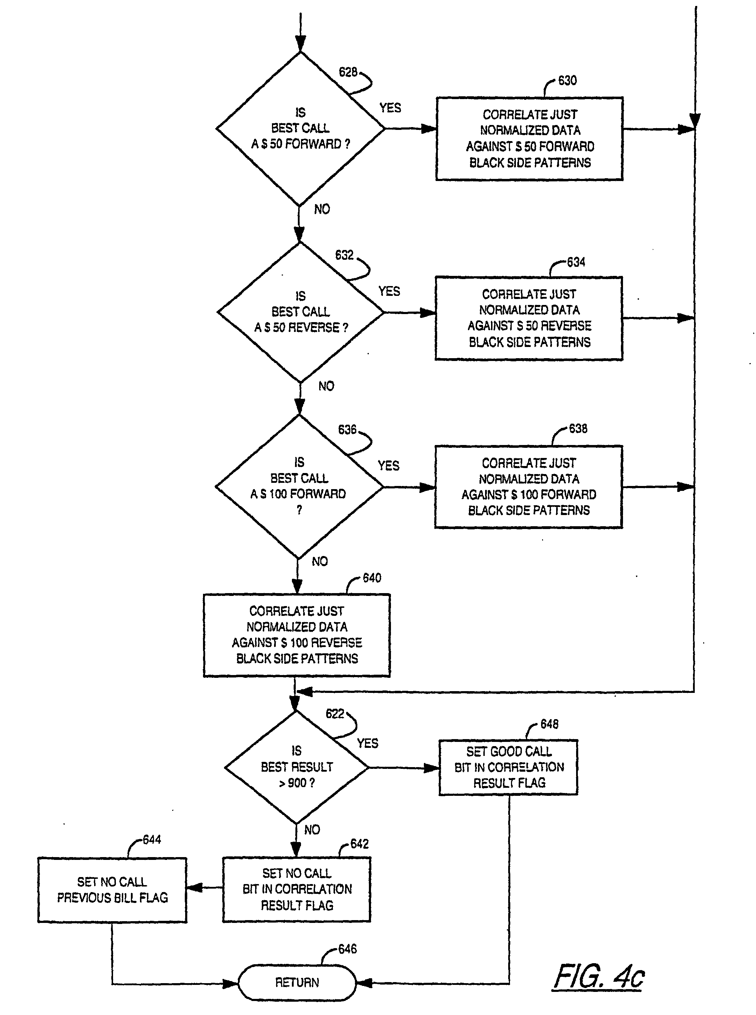

According to another embodiment, a denomination to be prompted to the operator is determined on the basis of a comparison of information retrieved from a given no call bill and master information associated with genuine bills. For example, in some discriminators, the denomination of a bill is determined by scanning the bill, generating a scanned pattern from information retrieved via the scanning step, and comparing the scanned pattern with one or more master patterns associated with one or more genuine bills associated with one or more denominations. If the scanned pattern sufficiently matches one of the master patterns, the denomination of the bill is called or determined to be the denomination associated with the best matching master pattern. However, in some discriminators, a scanned pattern must meet some threshold degree of matching or correlation before the denomination of a bill will be called. In such discriminators, bills whose scanned pattern does not sufficiently match one of the master patterns are not called, i.e., they are no calls. According to the present embodiment, the discriminator would suggest to the operator that a no call had the denomination associated with the master pattern that most closely matched its scanned pattern even though that match was insufficient to call the denomination of the bill without the concurrence of the operator. The operator may accept this suggestion or alter the suggested denomination as described above. For example, in a discriminator similar to that described in U.S. Pat. No. 5,295,196, the discriminator may prompt the operator with the denomination associated with the master pattern that has the highest correlation with the scanned pattern associated with the given no call bill. Additional examples may be made with reference to FIGs. 3 and 4a-c. For example, with respect to Fig. 3, if the highest correlation for a bill is below 800, the bill is a no call bill. In such a case, assume the highest correlation is 790 and this correlation is associated with a $1 bill. When this no call bill is to be reconciled, the discriminator would suggest to the operator that the no call was a $1 bill.

According to another embodiment, a denomination to be prompted to the operator is determined on the basis of preset criteria established by the manufacturer. For example, in Fig. 17, the denomination indicating elements are arranged in increasing denominational order. The discriminator may be designed to default so that a given one of these denomination selection elements is initially highlighted when no call bills are to be reconciled. For example, for each no call the $10 element 2506d may initially be selected. Alternatively, the discriminator may be designed to default to the first denomination selection element listed, e.g., the $1 denomination element 2506a.

According to another embodiment, a denomination to be prompted to the operator is determined on the basis of user-defined criteria set by the operator of a discriminator. For example, in Fig. 17, the operator may designate the discriminator to default so that a given one of the denomination indicating elements is initially highlighted when no call bills are to be reconciled. For example, for each no call the operator may designate that the $10 element 2506d is to be initially selected. The operator may be permitted to set the default no call denomination, for example, in a set up mode entered into before bills in a stack are processed.

In addition to the ways discussed above whereby an initial denomination is prompted to the operator in connection with the reconciling a no call bill, according to other embodiments one or more alternate denominations are may also be suggested. For example, according to the method whereby the initial bill is suggested to the operator based on the denomination associated with a master pattern having the highest correlation relative to a scanned pattern, if the operator rejects the initial suggestion, the discriminator may be designed to then suggest an alternate denomination based on the master pattern associated with a genuine bill of a different denomination having the next highest correlation value. If the operator rejects the second suggestion, the discriminator may be designed to then suggest a second alternate denomination based on the master pattern associated with a genuine bill of a different denomination having the next highest correlation value, and so on.

For example, suppose the highest correlation was associated with a $1, the second highest correlation was associated with $10, and the third highest correlation was associated with $50. According to this embodiment, the discriminator would initially suggest that the no call was a $1. If the operator determined the no call was not a $1, the discriminator would then suggest that the no call was a $20. If the operator determined the no call was not a $10, the discriminator would then suggest that the no call was a $50. For example, according to the embodiment of FIGs. 19a-b, the discriminator would first ask whether the no call was a $1 by displaying the message "$1?" in the display area 2704. If the no call was a $1, the operator would depress the accept or yes key 2710. If the no call was not a $1 bill, the operator would depress the other denomination or no key 2711, in which case, the display area would display the message "$10?" and so on. Alternatively, the denomination selection elements may be arranged so that their relative order is based on the correlation results. For example, taking the menu list 2605 of Fig. 18, the denomination elements may be ordered in the order of decreasing correlation values, e.g., according to the previous example with the $1 denomination element being listed first, the $10 denomination element being listed second, the $50 denomination element being listed third and so on. Alternatively, the denomination elements may be listed in the reverse order. According to another embodiment, the denomination element associated with the highest correlation may be listed in the middle of the list surrounded by the denomination elements associated with the second and third highest correlations, and so on. For the above example, the $1 element 2606a would be listed in the middle of the menu list 2605 surrounded by the $10 element 2606d on one side and the $50 element 2606f on the other side.

Likewise the order in which denominations are suggested to the operator and/or arranged on the control panel may be based on other criteria such as those described above, such as the prior bill information (e.g., last bill, last no call, last call denomination), historical information, user-defined order, manufacturer-defined order, and random order. For example, using the historical data example given above based on 180 no calls (100 $5 no calls, 50 $10 no calls, and 30 $20 no calls), the order that denominations are suggested to the operator may be first $5, then $10, and then $20. Alternatively, using the last bill information and assuming the following sequence of bills ($2, $5, $5, $5, $20, $10, no call indicated to be a $50, no call); the discriminator would suggest denominations for the last no call in the following order: $50, $10, $20, $5, $2. Likewise the order in which the denominations are arranged on a control panel such as in FIGs. 18 and 16 may be determined based on such information, for example, according to the orders described above in connection with using correlation values. For example, the denominations may be listed in the prompting order suggested above (e.g., $5, $10, $20 in the historical information example and $50, $10, $20, $5, $2 in the last bill example). Alternatively they may be listed in the reverse order. Alternatively, they may be arranged with the first suggested denomination being in the center of the list and being initially highlighted or selected. This first suggested denomination may be surrounded by the second and third suggested denominations which are in turn surrounded by the fourth and fifth suggested denomination, and so on. A default sequence may be used to provide the order for any remaining denominations which are not dictated by a particular prompting criteria in a given situation. In the above examples, the denominations might be arranged on a menu list in the following orders: $2, $1, $10, $5, $20, $50, $100 for the historical information example and $1, $5, $10, $50, $20, $2, $100. In general, an example of a listing order according to this approach could be from top to bottom: 6th priority or suggested denomination, 4th, 2nd, 1st, 3rd, 5th, and 7th.

Embodiments arranging the respective order in which denominations are suggested to the operator and/or displayed on the control panel will likely aid the operator by reducing the projected number of times the operator will need to hit one of the scroll keys and/or "OTHER DENOM" or "NO" key.

Now several methods will be described in connection reconciliation of no calls in multi-output pocket machines after all bills in a stack have been processed. Recalling a previous example in which four no call bills were separated out from a stack of fifty bills and the machine halted after processing all fifty bills, the discriminator then prompts the operator to reconcile the value of the four no call bills. For example, assume the no call bills corresponded to the 5th, 20th, 30th, and 31st bills in the stack and were $2, $50, $10, and $2 bills respectively. The degree of intelligence employed by the discriminator in prompting the operator to reconcile the value of the no call bills may vary depending on the particular embodiment employed. According to one embodiment the operator may depress or select the denomination selection elements corresponding the denominations of the no call bills without any prompting from the discriminator as to their respective denominations. For example, using the control panel of Fig. 14, the operator would depress the $2 selection element 64g twice, the $10 selection element 64c once, and the $50 selection element 64e once. The discriminator may or may not inform the operator that four no call bills must be reconciled and may or may not limit the operator to entering four denominations. Likewise, in other embodiments, the operator may use the scroll keys to cause the desired denomination to become selected and then depress the accept key. Alternatively, a numerical keypad may be provided for permitting the operator to indicate the number of bills of each denomination that have not been called. For example, the above example, the operator could use the scroll keys so that the $2 denomination was selected, then press "2" on the keypad for the number of $2 no calls in the batch, and then press an enter or accept key. Then the operator could use the scroll keys so that the $10 denomination was selected, then press "1" on the keypad for the number of $10 no calls in the batch, and then press an enter or accept key and so on. The keypad may comprise, for example, keys or selection elements associated with the digits 0-9.

Alternatively, the discriminator may prompt the operator as to the denomination of each no call bill, for example, by employing one of the prompting methods discussed above, e.g., default, random, user-defined criteria, manufacturer defined criteria, prior bill information (last bill, last no call, last called denomination), historical information, scanned and master comparison information (e.g., highest correlation). For example, the discriminator may serially interrogate the examiner as to the denomination of each no call, for example, the display may initially query "Is 1st no call a $2?". Depending on the embodiment of the control panel being used, the operator could then select "ACCEPT" or "YES" or select the $2 denomination selection element, select "OTHER DENOM" or "NO" or use the scroll keys or select the appropriate denomination selection element, or if the operator finds the first bill unacceptable, the operator may put the first no call bill aside and select "CONT". The discriminator may then query the operator as to the denomination of the second no call bill, and so on. The denomination prompted to the operator would depend on the prompting criteria employed. For example, suppose the prompting criteria was the denomination of the preceding bill and further suppose that in the four no call example given above that the first bill was a $2, the 2nd bill was a $10, the 3rd bill was a $1, the 4th bill was a $1, the 19th bill was a $50, the 29th bill was a $10, and as stated above, the 30th bill was a $10. The discriminator would then prompt the operator as to whether the first no call was a $1. Since the first no call is a $2, the operator would choose "NO", "OTHER DENOM", scroll, or hit the $2 selection element depending on the embodiment be used. If the "NO" or "OTHER DENOM" key were pressed, the discriminator would review the preceding bills in reverse order arid suggest the first denomination encountered that had not already been suggested, in this case a $10. If the "NO" or "OTHER DENOM" key were pressed again, the discriminator would then suggest a $2. A predetermined default sequence may be utilized when prior bill information does not contain the desired denomination. Once the operator indicates that the first no call is a $2, the discriminator would then prompt the operator as to whether the second no call was a $50. Since the second no call was indeed a $50 the operator would choose "ACCEPT", "YES", or select the $50 denomination selection element depending on the embodiment chosen. The discriminator would then suggest that the third no call was a $10 and the operator would similarly indicate acceptance of the $10 suggested denomination. Finally, the discriminator would suggest that the fourth no call was a $10. Since the last no call was a $2, the operator would reject the $10 suggestion and indicate that the fourth no call bill was a $2 as described above. The operation of the discriminator using a different prompting criteria would proceed in a similar manner and as described above with respect to each of the described prompting methods.

While discussed above with respect to no calls, the above embodiments could also be employed in connection with other types of flagged bills such as reverse-faced bills, reverse forward/reverse oriented bills, unfit bills, suspect bills, etc.

Referring now to Fig. 21, the touch screen I/O device 2956 includes a touch screen 2960 mounted over a graphics display 2961. In one embodiment, the display 2961 is a liquid crystal display (LCD) with backlighting. The display may have, for example, 128 vertical pixels and 256 horizontal pixels. The display 2961 contains a built-in character generator which permits the display 2961 to display text and numbers having font and size pre-defined by the manufacturer of the display. Moreover, a controller such as a CPU is programmed to permit the loading and display of custom fonts and shapes (e.g., key outlines) on the display 2961.

The touch screen 2960 may be an X-Y matrix touch screen forming a matrix of touch responsive points. The touch screen 2960 includes two closely spaced but normally separated layers of optical grade polyester film each having a set of parallel transparent conductors. The sets of conductors in the two spaced polyester sheets are oriented at right angles to each other so when superimposed they form a grid. Along the outside edge of each polyester layer is a bus which interconnects the conductors supported on that layer. In this manner, electrical signals from the conductors are transmitted to the controller. When pressure from a finger or stylus is applied to the upper polyester layer, the set of conductors mounted to the upper layer is deflected downward into contact with the set of conductors mounted to the lower polyester layer. The contact between these sets of conductors acts as a mechanical closure of a switch element to complete an electrical circuit which is detected by the controller through the respective buses at the edges of the two polyester layers, thereby providing a means for detecting the X and Y coordinates of the switch closure.

As illustrated in Fig. 21, the touch screen 2960 forms a matrix of ninety-six optically transparent switch elements having six columns and sixteen rows. The controller is programmed to divide the switch elements in each column into groups of three to form five switches in each column. Actuation of any one of the three switch elements forming a switch actuates the switch. The uppermost switch element in each column remains on its own and is unused.

Although the touch screen 2960 uses an X-Y matrix of optically transparent switches to detect the location of a touch, alternative types of touch screens may be substituted for the touch screen 2960. These alternative touch screens use such well-known techniques as crossed beams of infrared light, acoustic surface waves, capacitance sensing, and resistive membranes to detect the location of a touch. The structure and operation of the alternative touch screens are described and illustrated, for example, in U.S. Patent Nos. 5,317,140, 5,297,030, 5,231,381, 5,198,976, 5,184,115, 5,105,186, 4,931,782, 4,928,094, 4,851,616, 4,811,004, 4,806,709, and 4,782,328.

## Claims

1. A currency counting and discrimination device for receiving a stack of currency bills, rapidly counting and discriminating the bills in the stack, and then restacking the bills comprising:
an input receptacle (1664) for receiving a stack of currency bills of a plurality of denominations to be discriminated;
a discriminating unit (1666) for discriminating the denomination of said currency bills of a plurality of denominations;
one or more output receptacles (1668, 2208) for receiving said currency bills after being discriminated by said discriminating unit;
a transport mechanism (A, B) for transporting said currency bills, one at a time, from said input receptacle past a sensor of said discriminating unit and to said one or more output receptacles;
one or more counters keeping track of the value of bills discriminated;
means for flagging bills meeting or failing to meet a predetermined characteristic, said means for flagging suspending the operation of the device;
**characterized in that** it further comprises:
means for an operator of said device to indicate the value of any flagged bills (61, 2302), said means appropriately affecting said one or more counters; and means for restarting the operation of the device (61, 2302) without the operator of the device having to indicate the value of a flagged bill and without adversely affecting said one or more counters.

2. The device of claim 1 wherein the means for flagging suspends the operation of the device with a flagged bill being located in one of the output receptacles (1668, 2208).

3. The device of claim 2 wherein the means for flagging suspends the operation of the device with a flagged bill being the last bill delivered to one of the output receptacles (1668, 2208).

4. The device of according to claim 1 further comprising an inspection station (1690, 1699) and wherein the means for flagging suspends the operation of the device with a flagged bill being located in said inspection station (1690, 1699).

5. The device of according to any of claims 1-4 wherein the characteristic is determining the denomination of a bill and wherein the means for flagging flags bills whose denomination are not determined by said discriminating unit (1666).

6. The device of claim 5 wherein the means for an operator of said device to indicate the value of any flagged bills is adapted to permit the operator to indicate the value of any bills whose denomination are not determined by said discriminating unit (1666), a bill whose denomination is not determined by said discriminating unit being a no call bill, said means appropriately effecting said one or more counters.

7. The device according to any of claims 1-6 further comprising a housing for said input receptacle, said discriminating unit, said one or more output receptacles, and said transport mechanism; wherein said means for an operator of said device to indicate the value of any flagged bills is affixed to said housing.

8. The device according to any of claims 1-7 wherein said means for an operator of said device to indicate the value of any flagged bills comprise denomination selection elements.

9. The device of according to any of claims 1-8 wherein said one or more counters comprise:
either (a) one or more denomination counters associated with one or more denominations; each counter keeping track of the number of discriminated bills belonging to the associated denomination as determined by said discrimination unit; or
(b) a total value counter maintaining the total value of said bills as they are discriminated by said discrimination unit; or
(c) both one or more denomination counters and a total value counter.

10. The device of claim 9 wherein said means for an operator of said device to indicate the value of any flagged bills comprise denomination selection elements corresponding to one or more denominations whereby selection of one of said denomination selection elements (a) increases either (i) a domination counter corresponding to the denomination of said selected denomination selection element, (ii) said total value counter by the value associated with said selected denomination selection element, or (iii) both and (b) restarts the operation of said currency counting and discrimination device, said denomination selection elements enabling said operator to thereby conveniently increment a respective denomination counter and/or total value counter and to restart the operation of the currency counting and discrimination device when said operator determines said undiscriminated bill is acceptable;
and wherein the means for restarting comprises a continuation element (165) the selection of which resumes operation of said currency counting and discrimination device without increasing one of said denomination counters or said total value counter.

11. The device according to any of claims 1-10 wherein said means for an operator of said device to indicate the value of any flagged bills comprise a plurality of denomination keys (64a-64g), each key being associated with a given denomination.

12. The device of claim 11 wherein the selection of one of said plurality of denomination keys (64a-64g) causes the operation of the device to be resumed.

13. The device according to any of claims 1-12 comprising: a control panel (61) having an input device adapted to receive input from an operator of the device; and a processor electrically coupled to the sensor and the control panel and programmed to:
(a) denominate bills;
(b) keep track of the value of bills processed;
(c) set a flag when the processor detects a bill meeting or failing to meet the predetermined characteristic;
(d) suspend the operation of the device when the flag is set;
(e) enable the operator, upon suspension of the operation of the device, to designate via the control panel the denomination of a flagged bill; and
(f) enable the operator, upon suspension of the operation of the device, to restart the operation of the device without designating the denomination of a flagged bill.

14. The device according to any of claims 1-12 comprising:
a control panel (61) having an input device adapted to receive input from an operator of the device; and
a processor electrically coupled to the sensor and the control panel and programmed to:
(a) denominate bills;
(b) keep track of the value of bills processed;
(c) set a flag when the denominating processor is unable to identify the denomination of a bill;
(d) suspend the operation of the device when the flag is set;
(e) enable the operator, upon suspension of the operation of the device, to designate via the control panel the denomination of a bill whose denomination is not determined by the processor; and
(f) enable the operator, upon suspension of the operation of the device, to restart the operation of the device without designating the denomination of a bill whose denomination is not determined by the processor.

15. The device according to any of claims 1-12 comprising:
a plurality of denomination keys (64a-64g), each key being associated with a given denomination; and
a continuation key (65);
wherein the operation of the device is suspended when the discriminating unit is unable to identify the denomination of a bill and wherein the depression of one of the plurality of denomination keys causes the corresponding denomination to be selected and wherein the depression of the continuation key causes the operation of the device to be resumed.

16. The device of claim 15 wherein the depression of one of the plurality of denomination keys further causes one or more counters to be appropriately incremented based on the denomination associated with the denomination key that is selected.

17. The device of claim 16 wherein the depression of one of the plurality of denomination keys further causes the operation of the device to be resumed.

18. The device of claim 16 wherein the operation of the device is suspended with the bill whose denomination the discriminating unit is unable to identify being located in the output receptacle thereby enabling its removal prior to depression of the continuation key (165).

19. The device of claim 15 wherein depression of a key after the depression of one of the denomination keys causes the denomination associated with the depressed denomination key to be indicated to the device.

20. The device of claims 1-12 comprising:
a plurality of denomination keys (2506a-2506g), each key being associated with a given denomination; and
one or more additional keys (2510, 2512);
wherein the operation of the device is suspended when the discriminating unit is unable to identify the denomination of a bill and wherein the depression of one of the plurality of denomination keys causes the corresponding denomination to be selected and wherein the depression of one of the additional keys (2512) causes the operation of the device to be resumed without adversely affecting the one or more counters.

21. The device of claim 20 wherein depression of one of the additional keys (2510) after the depression of one of the denomination keys causes the denomination associated with the depressed denomination key to be indicated to the device.

22. The device of claim 20 wherein depression of one of the additional keys (2510) after the depression of one of the denomination keys causes the one or more counters to be appropriately incremented based on the denomination associated with the depressed denomination key.

23. The device according to any of claims 1-22 further comprising means for prompting (2304, 2314a-2314g) an operator of the device as to the denomination of a flagged bill.

24. The device of claim 23 wherein the flagged bill is a no call bill and said prompting means initially suggests that the denomination of a no call bill based on a criteria selected from the group consisting of: immediately prior bill information, last no call information; last called bill information, scanned and master data comparison information, user-defined information, manufacturer-defined information, historical information, default information, and random basis.

25. The device of claim 23 wherein the flagged bill is a no call bill and wherein said prompting means initially suggests that the denomination of a no call bill is the same as that of an immediately prior bill.

26. The device of claim 23 wherein the flagged bill is a no call bill and wherein said prompting means initially suggests that the denomination of a no call bill is the same as that of the last bill whose denomination was determined by said discriminating unit.

27. The device of claim 23 wherein the flagged bill is a no call bill and wherein said prompting means initially suggests that the denomination of a no call bill is the same as that of the last bill that was a no call bill.

28. The device of claim 23 wherein the flagged bill is a no call bill and wherein said discriminating unit determines the denomination of a bill by comparing a scanned data retrieved from said bill by said sensor with master data associated with one or more genuine bills and wherein said prompting means initially suggests that the denomination of a no call bill is the denomination associated with the master data that most closely matches the scanned data.

29. The device according to any of claims 1-28 having a single output receptacle (1668).

30. The device according to any of claims 1-28 wherein the device has exactly two output receptacles.

31. The device according to any of claims 1-28 wherein the device has a plurality of output receptacles (2208).

32. The device according to any of claims 1-28 wherein the device has fewer output receptacles than the number of denominations the device is adapted to discriminate.

33. A method of discriminating and counting currency bills using a currency counting and discrimination device for receiving a stack of currency bills, rapidly counting and discriminating the bills in the stack, and then restacking the bills comprising:
receiving a stack of currency bills of a plurality of denominations to be discriminated in an input receptacle (1664) of the currency discrimination device;
transporting said currency bills, one at a time, from said input receptacle past a sensor of a discriminating unit (1666) to one or more output receptacles; discriminating the denomination of said currency bills of a plurality of denominations; keeping track of the value of bills discriminated using one or more counters;
flagging bills meeting or failing to meet a predetermined characteristic by suspending the operation of the device;
**characterized in that** it further comprises:
either
(a) indicating manually the value of any flagged bills (61, 2302) and appropriately affecting said one or more counters;
or
(b) restarting the operation of the device (61, 2302) without indicating the value of a flagged bill and without adversely affecting said one or more counters.

34. The method of claim 33 wherein the device has a control panel (61) further comprising:
either
(a) using the control panel to manually communicate the denomination of a flagged bill or
(b) using the control panel to manually restart the operation of the device without communicating the denomination of a flagged bill to the discriminating unit.

35. The method of claim 34 wherein the predetermined characteristic is the discriminating unit failing to determine the denomination of a bill, a bill whose denomination is not determined being termed a no call bill and wherein the operator either
(a) uses the control panel to manually communicate the denomination of a bill whose denomination is not determined by the discriminating unit to the discriminating unit or
(b) uses the control panel to manually restart the operation of the device without communicating the denomination of a bill whose denomination is not determined by the discriminating unit to the discriminating unit.

36. The method of claim 34 or claim 35 further comprising the discriminating device resuming operation after the operator communicates the denomination of the bill.

37. The method of according to any of claims 34-36 wherein the step of suspending the feeding is performed so that the flagged bill is located in an output receptacle and further comprising manually removing from the output receptacle the flagged bill and then using the control panel to restart the feeding without indicating the denomination of the flagged bill.

38. The method according to any of claims of 34-37 wherein the device has denomination keys and a continuation key and wherein the predetermined characteristic is the discriminating unit failing to determine the denomination of a bill, a bill whose denomination is not determined being termed a no call bill and comprising:
manually designating the denomination of a bill whose denomination is not automatically determined by depressing an appropriate denomination key or manually depressing the continuation key on the device to cause the feeding to be resumed without designating the denomination of a bill whose denomination is not automatically determined.

39. The method of claim 38 further comprising incrementing an agprapriate counter in response to the depression of the denomination key.

40. The method of claim 39 further comprising resuming operation in response to the depression of the denomination key.

41. The method of claim 38 wherein the discriminating device has an additional key in addition to the denomination keys and further comprising, after manually designating the denomination, the discriminating device incrementing an appropriate counter in response to the depression of the additional key.

42. The method of claim 41 further comprising resuming operation in response to the depression of the additional key.

43. The method according to any of claims 34-35 wherein the device has keys including denomination keys and a continuation key and comprising:
(i) manually selecting the denomination of a bill whose denomination is not determined by the discriminating unit by depressing an appropriate denomination key or
(ii) manually selecting a continuation key.

44. The method of claim 43 further comprising manually depressing a key after the selecting the denomination to cause the selected denomination to be indicated to the device.

45. The method according to any of claims 34-35 wherein the device has keys including denomination keys and comprising:
either
(i) manually selecting an appropriate denomination key corresponding to the denomination of a bill whose denomination is not determined by the discriminating unit, or
(ii) manually selecting a continuation key.

46. The method of claim 45 wherein the selecting an appropriate denomination key comprising scrolling to the denomination to be selected.

47. The method of claim 45 or claim 46 further comprising the operator manually selecting a key after the selecting an appropriate denomination key to cause the selected denomination to be indicated to the device.

## Patentansprüche

1. Eine Währungszähl- und Unterscheidungsvorrichtung zum Aufnehmen eines Banknotenstapels, schnellen Zählen und Unterscheiden der Banknoten in dem Stapel und anschließenden Wiederstapeln der Banknoten, die umfasst:
einen Eingabebehälter (1664) zum Aufnehmen eines zu unterscheidenden Banknotenstapels mit mehreren Nennwerten;
eine Unterscheidungseinheit (1666) zum Unterscheiden des Nennwerts der Banknoten von mehreren Nennwerten;
einen oder mehrere Ausgabebehälter (1668, 2208) zum Aufnehmen der Banknoten, nachdem diese durch die Unterscheidungseinheit unterschieden wurden;
einen Transportmechanismus (A, B) zum vereinzelten Transportieren der Banknoten von dem Eingabebehälter entlang eines Sensors der Unterscheidungseinheit und zu einem Ausgabebehälter oder mehreren Ausgabebehältern;
einen Zähler oder mehrere Zähler, die den Wert der zu unterscheidenden Banknoten verfolgen;
eine Einrichtung zum Anzeigen, dass Banknoten eine vorbestimmte Charakteristik aufweisen oder nicht aufweisen, wobei die Einrichtung zum Anzeigen den Betrieb der Vorrichtung abbricht;
**dadurch gekennzeichnet, dass** diese weiter umfasst:
eine Einrichtung für einen Bediener der Vorrichtung, um den Wert jeder angezeigten Banknote (61, 2302) anzugeben, wobei die Einrichtung in geeigneter Weise den einen Zähler oder die mehreren Zähler beeinflusst; und
eine Einrichtung zum Wiederstarten des Betriebs der Vorrichtung (61, 2302), ohne dass der Bediener der Vorrichtung den Wert einer angezeigten Banknote angeben muss und ohne nachteilig den einen Zähler oder die mehreren Zähler zu beeinflussen.

2. Die Vorrichtung gemäß Anspruch 1, worin die Einrichtung zum Anzeigen den Betrieb der Vorrichtung abbricht, wenn eine angezeigte Banknote in einem der Ausgabebehälter (1668, 2208) angeordnet ist.

3. Die Vorrichtung gemäß Anspruch 2, worin die Einrichtung zum Anzeigen den Betrieb der Vorrichtung abbricht, wobei eine angezeigte Banknote die letzte Banknote ist, die in einen der Ausgabebehälter (1668, 2208) geliefert wurde.

4. Die Vorrichtung gemäß Anspruch 1, die weiter eine Inspektionsstation (1690, 1699) umfasst, wobei die Einrichtung zum Anzeigen den Betrieb der Vorrichtung abbricht, wenn eine angezeigte Banknote in der Inspektionsstation (1690, 1699) angeordnet ist.

5. Die Vorrichtung gemäß einem der Ansprüche 1-4, worin die Charakteristik die Bestimmung des Nennwerts einer Banknote ist und worin die Einrichtung zum Anzeigen Banknoten anzeigt, deren Nennwert nicht durch die Unterscheidungseinheit (1666) bestimmt wurde.

6. Die Vorrichtung gemäß Anspruch 5, worin die Einrichtung für einen Bediener der Vorrichtung zum Anzeigen des Werts jeder angezeigten Banknote angepasst ist, um dem Bediener zu ermöglichen, den Wert jeder Banknote anzugeben, deren Nennwert nicht durch die Unterscheidungseinheit (1666) bestimmt wurde, und eine Banknote, deren Nennwert nicht bestimmt wurde, durch die Unterscheidungseinheit eine Nicht-Signal-Banknote ist, wobei die Einrichtung in geeigneter Weise den einen Zähler oder die mehreren Zähler beeinflusst.

7. Die Vorrichtung gemäß einem der Ansprüche 1-6, die weiter ein Gehäuse für den Eingabebehälter umfasst, wobei die Unterscheidungseinheit, den einen Ausgabebehälter oder die mehreren Ausgabebehälter und den Transportmechanismus umfasst; worin die Einrichtung für einen Bediener der Vorrichtung zum Angeben des Werts einer angezeigten Banknote mit dem Gehäuse verbunden ist.

8. Die Vorrichtung gemäß einem der Ansprüche 1-7, worin die Einrichtung für einen Bediener der Vorrichtung zum Angeben des Werts jeder angezeigten Banknote Nennwertauswahlelemente umfasst.

9. Die Vorrichtung gemäß einem der Ansprüche 1-8, worin der eine Zähler oder die mehreren Zähler umfasst oder umfassen;
entweder (a) einen oder mehrere Nennwertzähler, der oder die mit einem Nennwert oder mehreren Nennwerten verknüpft ist oder sind; wobei jeder Zähler die Anzahl der unterschiedenen Banknoten verfolgt, die zu dem verknüpften, durch die Unterscheidungseinheit bestimmten Nennwert gehören; oder
(b) einen Gesamtwertzähler, der den Gesamtwert der Banknoten, wie diese durch die Unterscheidungseinheit unterschieden wurden, festhält; oder
(c) beide, den einen oder die mehreren Nennwertzähler und einen Gesamtwertzähler.

10. Die Vorrichtung gemäß Anspruch 9, worin die Einrichtung für einen Bediener der Vorrichtung zum Anzeigen des Werts einer angezeigten Banknote Nennwertauswahlelemente umfasst, die mit einem Nennwert oder mehreren Nennwerten korrespondieren, wobei eine Auswahl eines der Nennwertauswahlelemente (a) entweder (i) einen Nennwertzähler korrespondierend zum Nennwert des ausgewählten Nennwertauswahlelements erhöht, (ii) den Gesamtwertzähler um den Wert, der mit dem ausgewählten Nennwertauswahlelement verknüpft ist, erhöht, oder (iii) beides, und (b) den Betrieb der Währungszähl- und Unterscheidungsvorrichtung wiederaufnimmt, wobei die Nennwertauswahlelemente den Bediener befähigen, bequem einen entsprechenden Nennwertzähler und/oder Gesamtwertzähler zu erhöhen und den Betrieb der Währungszähl- und Unterscheidungsvorrichtung wiederaufzunehmen, wenn der Bediener die nicht unterschiedene Banknote als akzeptierbar bestimmt;
und worin die Einrichtung zum Wiederstarten ein Fortsetzungselement (165) umfasst, dessen Auswahl den Betrieb der Währungszähl- und Unterscheidungsvorrichtung wiederaufnehmen lässt, ohne einen der Nennwertzähler oder den Gesamtwertzähler zu erhöhen.

11. Die Vorrichtung gemäß einem der Ansprüche 1-10, worin die Einrichtung für einen Bediener der Vorrichtung zum Anzeigen des Werts der wieder angezeigten Banknote mehrere Nennwerttasten (64a-64g) umfasst, wobei jede Taste mit einem gegebenen Nennwert verknüpft ist.

12. Die Vorrichtung gemäß Anspruch 11, worin die Auswahl von einer Nennwerttaste oder mehrerer Nennwerttasten (64a-64g) bewirkt, dass der Betrieb der Vorrichtung wieder aufgenommen wird.

13. Die Vorrichtung gemäß einem der Ansprüche 1-12 umfasst:
ein Steuerpult (61) mit einer Eingabeeinrichtung, die angepasst ist, um Eingaben von einem Bediener der Vorrichtung zu empfangen; und einen Prozessor, der elektrisch mit dem Sensor und dem Steuerpult gekoppelt ist, und programmiert ist zum:
(a) Banknoten unterscheiden;
(b) Verfolgen des Werts der verarbeiteten Banknoten;
(c) Setzen einer Anzeige, wenn der Prozessor eine Banknote entdeckt, die die vorbestimmte Charakteristik aufweist oder nicht aufweist;
(d) Beenden des Betriebs der Vorrichtung, wenn die Anzeige gesetzt ist;
(e) Befähigen des Bedieners, aufgrund Abbrechens des Betriebs der Vorrichtung, über das Steuerpult den Nennwert einer angezeigten Banknote zu kennzeichnen; und
(f) Befähigen des Bedieners, aufgrund Abbrechens des Betriebs der Vorrichtung den Betrieb der Vorrichtung wieder aufzunehmen, ohne den Nennwert einer angezeigten Banknote zu bestimmen.

14. Die Vorrichtung gemäß einem der Ansprüche 1-12, die umfasst:
ein Steuerpult (61) mit einer Eingabeeinrichtung, die angepasst ist, um eine Eingabe von einem Bediener der Vorrichtung zu empfangen; und
einen Prozessor, der elektrisch mit dem Sensor und dem Steuerpult verbunden ist und programmiert ist zum:
(a) Banknoten unterscheiden;
(b) Verfolgen des Werts der verarbeiteten Banknoten;
(c) Setzen einer Anzeige, wenn der Nennwertprozessor unfähig ist, den Nennwert einer Banknote zu identifizieren;
(d) Abbrechen des Betriebs der Vorrichtung, wenn die Anzeige gesetzt ist;
(e) Befähigen des Bedieners, aufgrund Abbrechens des Betriebs der Vorrichtung über das Steuerpult den Nennwert einer Banknote zu bestimmen, deren Nennwert nicht durch den Prozessor bestimmt wurde; und
(f) Befähigen des Bedieners, aufgrund Abbrechens des Betriebs der Vorrichtung den Betrieb der Vorrichtung wieder aufzunehmen, ohne den Nennwert einer Banknote, deren Nennwert nicht bestimmt worden ist durch den Prozessor, anzuzeigen.

15. Die Vorrichtung gemäß einem der Ansprüche 1-12, die umfasst:
mehrere Nennwerttasten (64a-64g), wobei jede Taste mit einem gegebenen Nennwert verknüpft ist; und
eine Fortsetzungstaste (65);
worin der Betrieb der Vorrichtung abgebrochen wird, wenn die Unterscheidungseinheit nicht in der Lage ist, den Nennwert einer Banknote zu identifizieren und worin das Drücken eines der mehreren Nennwerttasten dazu führt, dass der zugehörige Nennwert ausgewählt ist und worin das Drücken der Fortsetzungstaste dazu führt, dass der Betrieb der Vorrichtung wieder aufgenommen wird.

16. Die Vorrichtung gemäß Anspruch 15, worin das Drücken von einer der mehreren Nennwerttasten weiter dazu führt, dass ein Zähler oder mehrere Zähler in geeigneter Weise erhöht werden, basierend auf dem Nennwert, der mit der Nennwerttaste, die ausgewählt wurde, verknüpft ist.

17. Die Vorrichtung gemäß Anspruch 16, worin das Drücken von einem der mehreren Nennwerttasten weiter verursacht, dass der Betrieb der Vorrichtung wieder aufgenommen wird.

18. Die Vorrichtung gemäß Anspruch 16, worin der Betrieb der Vorrichtung abgebrochen wird, wobei die Banknote, deren Nennwert die Unterscheidungseinheit nicht in der Lage war zu identifizieren, in dem Ausgabebehälter angeordnet ist, und dabei ihre Entfernung ermöglicht, bevor die Nennwerttaste (165) gedrückt wird.

19. Die Vorrichtung gemäß Anspruch 15, worin das Drücken. einer Taste nach dem Drücken von einer der Nennwerttasten dazu führt, dass der Nennwert, der mit der gedrückten Nennwerttaste verknüpft ist, der Vorrichtung angegeben wird.

20. Die Vorrichtung gemäß Anspruch 1-12, die umfasst:
mehrere Nennwerttasten (2506a-2506g), wobei jede Taste mit einem vorgegebenen Nennwert verknüpft ist;
eine Taste oder mehrere zusätzliche Tasten (2510, 2512);
worin der Betrieb der Vorrichtung abgebrochen wird, wenn die Unterscheidungseinheit nicht in der Lage ist, den Nennwert einer Banknote zu identifizieren, worin das Drücken einer der mehreren Nennwerttasten dazu führt, dass der zugehörige Nennwert ausgewählt wird, und worin das Drücken einer der zusätzlichen Tasten (2512) dazu führt, dass der Betrieb der Vorrichtung wieder aufgenommen wird, ohne dass ein Zähler oder mehrere Zähler nachteilig beeinflusst wird oder werden.

21. Die Vorrichtung gemäß Anspruch 20, worin das Drücken einer der zusätzlichen Tasten (2510) nach dem Drücken einer der Nennwerttasten dazu führt, dass der Nennwert, der mit der gedrückten Nennwerttaste verknüpft ist, der Vorrichtung angezeigt wird.

22. Die Vorrichtung gemäß Anspruch 20, worin das Drücken einer der zusätzlichen Tasten (2510) nach dem Drücken einer der Nennwerttasten dazu führt, dass ein Zähler oder mehrere Zähler in geeigneter Weise erhöht wird oder werden, basierend auf dem Nennwert, der mit der gedrückten Nennwerttaste verknüpft ist.

23. Die Vorrichtung gemäß einem der Ansprüche 1-22, die weiter Einrichtungen zum Mitteilen (2304, 2314a-2314g) einem Bediener der Vorrichtung bezüglich des Nennwerts einer angezeigten Banknote umfasst.

24. Die Vorrichtung gemäß Anspruch 23, worin die angezeigte Banknote eine Nicht-Signal-Banknote ist und die Mitteilungseinrichtung anfänglich vorschlägt, dass der Nennwert einer Nicht-Signal-Banknote auf einem Kriterium basiert, dass von einer Gruppe ausgewählt wird, die besteht aus: Information über die unmittelbar vorhergehende Banknote, letzte Nicht-Signal-Information; Information über die letzte angezeigte Banknote, abgetastete Daten und Vergleichsdaten-Vergleichsinformation, benutzerdefinierte Information, herstellerdefinierte Information, historische Information, Fehlerinformation und Information auf Zufallsbasis.

25. Die Vorrichtung gemäß Anspruch 23, worin die angezeigte Banknote eine Nicht-Signal-Banknote ist und worin die Mitteilungseinrichtung anfänglich vorschlägt, dass der Nennwert einer Nicht-Signal-Banknote derselbe ist, wie der einer unmittelbar vorhergehenden Banknote.

26. Die Vorrichtung gemäß Anspruch 23, worin die angezeigte Banknote eine Nicht-Signal-Banknote ist und worin die Mitteilungseinrichtung anfänglich vorschlägt, dass der Nennwert einer Nicht-Signal-Banknote derselbe ist, wie der der letzten Banknote, deren Nennwert durch die Unterscheidungseinheit bestimmt wurde.

27. Die Vorrichtung gemäß Anspruch 23, worin die angezeigte Banknote eine Nicht-Signal-Banknote ist und worin die Mitteilungseinrichtung anfänglich vorschlägt, dass der Nennwert einer Nicht-Signal-Banknote derselbe ist, wie der der letzten Banknote, die eine Nicht-Signal-Banknote war.

28. Die Vorrichtung gemäß Anspruch 23, worin die angezeigte Banknote eine Nicht-Signal-Banknote ist und worin die Unterscheidungseinheit bestimmt, dass der Nennwert einer Banknote durch Vergleich von abgetasteten Daten, die von der Banknote mittels eines Sensors entnommen wurden, mit Vergleichsdaten, die mit einer Banknote oder mehrerer echten Banknoten verknüpft sind, und worin die Mitteilungseinrichtung anfänglich vorschlägt, dass der Nennwert einer Nicht-Signal-Banknote der Nennwert ist, der mit den Vergleichsdaten verknüpft ist, die am wahrscheinlichsten mit den abgetasteten Daten zusammenpassen.

29. Die Vorrichtung gemäß einem der Ansprüche 1-28 mit einem einzigen Ausgabebehälter (1668).

30. Die Vorrichtung gemäß einem der Ansprüche 1-28, worin die Vorrichtung exakt zwei Ausgabebehälter umfasst.

31. Die Vorrichtung gemäß einem der Ansprüche 1-28, worin die Vorrichtung mehrere Ausgabebehälter (2208) umfasst.

32. Die Vorrichtung gemäß einem der Ansprüche 1-28, worin die Vorrichtung weniger Ausgabebehälter umfasst, als die Anzahl der Nennwerte, für die die Vorrichtung angepasst ist, zu unterscheiden.

33. Ein Verfahren zum Unterscheiden und Zählen von Banknoten mittels Verwenden einer Währungszähl- und Unterscheidungsvorrichtung zum Aufnehmen eines Banknotenstapels, schnellen Zählen und Unterscheiden der Banknoten in dem Stapel und anschließenden Wiederstapeln der Banknoten, das umfasst:
Aufnehmen eines zu unterscheidenden Banknotenstapels mit mehreren Nennwerten in einem Eingabebehälter (1664) der Währungszähl- und Unterscheidungsvorrichtung;
Vereinzeltes Transportieren der Banknoten von dem Eingabebehälter entlang eines Sensors der Unterscheidungseinheit (1666) zu einem oder mehreren Ausgabebehälter; Unterscheiden des Nennwerts der Banknoten mit mehreren Nennwerten; Verfolgen des Werts der unterschiedenen Banknoten mittels Verwenden eines oder mehrerer Zähler;
Anzeigen von Banknoten, die eine vorbestimmte Charakteristik aufweisen oder nicht aufweisen, durch Abbrechen des Betriebs der Vorrichtung;
**dadurch gekennzeichnet, dass** es weiter umfasst:
entweder
(a) manuelles Anzeigen des Werts jeder angezeigten Banknote (61, 2302) und geeignetes Beeinflussen eines oder mehrerer Zähler,
oder (b) Wiederaufnehmen des Betriebs der Vorrichtung (61, 2302) ohne den Wert einer angezeigten Banknote anzugeben und ohne negativ den einen oder mehrere Zähler zu beeinflussen.

34. Das Verfahren gemäß Anspruch 33, worin die Vorrichtung ein Steuerpult (61) aufweist und weiter umfasst;
entweder (a) Verwenden des Steuerpults, um manuell den Nennwert einer angezeigten Banknote mitzuteilen oder
(b) Verwenden des Steuerpults, um manuell den Betrieb der Vorrichtung wieder aufzunehmen, ohne den Nennwert einer angezeigten Banknote der Unterscheidungseinheit mitzuteilen.

35. Das Verfahren gemäß Anspruch 34, worin die vorbestimmte Charakteristik darin besteht, dass die Unterscheidungseinheit den Nennwert einer Banknote nicht bestimmt, wobei eine Banknote, deren Nennwert nicht bestimmt wurde, als Nicht-Signal-Banknote bezeichnet wird und worin der Bediener entweder
(a) das Steuerpult verwendet, um manuell den Nennwert einer Banknote, deren Nennwert nicht durch die Unterscheidungseinheit bestimmt wurde, der Unterscheidungseinheit mitzuteilen oder
(b) das Steuerpult verwendet, um manuell den Betrieb der Vorrichtung wieder aufzunehmen, ohne den Nennwert einer Banknote, deren Nennwert nicht durch die Unterscheidungseinheit bestimmt wurde, der Unterscheidungseinheit mitzuteilen.

36. Das Verfahren gemäß Anspruch 34 oder 35 umfasst weiter, dass die Unterscheidungseinheit den Betrieb wieder aufnimmt, nachdem der Bediener den Nennwert der Banknote mitgeteilt hat.

37. Das Verfahren gemäß einem der Ansprüche 34-36, worin der Schritt des Abbrechens des Zuführens durchgeführt wird, so dass die angezeigte Banknote in einem der Ausgabebehälter angeordnet ist und weiter das manuelle Entfernen von dem Ausgabebehälter der angezeigten Banknote umfasst und dann das Verwenden des Steuerpults umfasst, um das Zuführen wieder zu starten, ohne den Nennwert der angezeigten Banknote anzuzeigen.

38. Das Verfahren gemäß einem der Ansprüche 34-36, worin die Vorrichtung Nennwerttasten und eine Fortsetzungstaste aufweist, und worin die vorbestimmte Charakteristik darin besteht, dass die Unterscheidungseinheit den Nennwert einer Banknote nicht bestimmt, wobei eine Banknote, deren Nennwert nicht bestimmt wird, als Nicht-Signal-Banknote bezeichnet wird, und umfasst:
manuelles Bestimmen des Nennwerts einer Banknote, deren Nennwert nicht automatisch durch Drücken einer geeigneten Nennwerttaste bestimmt wird oder manuelles Drücken der Fortsetzungstaste auf der Vorrichtung, um zu bewirken, dass das Zuführen wiederaufgenommen wird, ohne den Nennwert einer Banknote anzuzeigen, deren Nennwert nicht automatisch bestimmt wurde.

39. Das Verfahren gemäß Anspruch 38, das weiter das Erhöhen eines geeigneten Zählers aufgrund des Drückens der Nennwerttaste umfasst.

40. Das Verfahren gemäß Anspruch 39, das weiter das Wiederaufnehmen des Betriebs aufgrund des Drückens der Nennwerttaste umfasst.

41. Das Verfahren gemäß Anspruch 38, worin die Unterscheidungsvorrichtung eine zusätzliche Taste zusätzlich zu den Nennwerttasten aufweist und weiter umfasst, dass nach dem manuellen Anzeigen des Nennwerts die Unterscheidungsvorrichtung einen geeigneten Zähler aufgrund des Drückens der zusätzlichen Taste erhöht.

42. Das Verfahren gemäß Anspruch 41, das weiter das Wiederaufnehmen des Betriebs aufgrund des Drückens der zusätzlichen Taste umfasst.

43. Das Verfahren gemäß einem der Ansprüche 34-35, worin die Vorrichtung Tasten aufweist, einschließlich Nennwerttasten und einer Fortsetzungstaste, das umfasst:
(i) manuelles Auswählen des Nennwerts einer Banknote, deren Nennwert nicht bestimmt wurde durch die Unterscheidungseinheit, durch Drücken einer geeigneten Nennwerttaste, oder
(ii) manuelles Auswählen einer Fortsetzungstaste.

44. Das Verfahren gemäß Anspruch 43, das weiter das manuelle Drücken einer Taste umfasst, nachdem der Nennwert ausgewählt wurde, um den ausgewählten Nennwert der Vorrichtung anzuzeigen.

45. Das Verfahren gemäß einem der Ansprüche 34-35, worin die Vorrichtung Tasten, einschließlich Nennwerttasten, aufweist, das umfasst:
entweder
(i) manuelles Auswählen einer geeigneten Fortsetzungstaste korrespondierend zu dem Nennwert einer Banknote, deren Nennwert nicht durch die Unterscheidungseinheit bestimmt wurde, oder
(ii) manuelles Auswählen einer Fortsetzungstaste.

46. Das Verfahren gemäß Anspruch 45, worin das Auswählen einer geeigneten Nennwerttaste das Durchgehen durch das Verzeichnis der auszuwählenden Nennwerte umfasst.

47. Das Verfahren gemäß Anspruch 45 oder 46, das weiter umfasst, dass der Bediener manuell eine Taste nach dem Auswählen einer geeigneten Nennwerttaste auswählt, um zu bewirken, dass der ausgewählte Nennwert der Vorrichtung angezeigt wird.

## Revendications

1. Dispositif de comptage et de discrimination de devises (10) destiné à recevoir une liasse de documents en devises comptant et discriminant rapidement les documents dans la liasse puis ré-empilant les documents, comprenant :
un réceptacle d'entrée (1664) destiné à recevoir une liasse de documents en devises d'une pluralité de dénominations pour être discriminées ;
une unité de discrimination (1666) destinée à discriminer la dénomination desdits documents en devises d'une pluralité de dénominations ;
un ou plusieurs réceptacles de sortie (1668, 2208) destinés à recevoir lesdits documents en devises après avoir été discriminées par ladite unité de discrimination ;
un mécanisme de transport (A, B) destiné à transporter lesdits documents en devises un à un depuis ledit réceptacle d'entrée devant un détecteur de ladite unité de discrimination et vers ledit ou ladite pluralité de réceptacles de sortie ;
un ou plusieurs compteurs conservant la trace de la valeur des documents discriminés ;
des moyens de signalisation des documents répondant ou manquant à répondre à une caractéristique prédéterminée ; lesdits moyens de signalisation suspendant le fonctionnement du dispositif ;
**caractérisé en ce qu'**il comprend en outre :
des moyens destinés à indiquer à un opérateur dudit dispositif la valeur d'un quelconque document signalé (61, 2302) ; lesdits moyens affectant de manière appropriée ledit un ou plusieurs compteurs ; et des moyens destinés à redémarrer le fonctionnement du dispositif (61, 2302) sans que l'opérateur du dispositif n'ait à indiquer la valeur d'un document signalé et sans affecter de manière négative ledit un ou plusieurs compteurs.

2. Dispositif selon la revendication 1, dans lequel les moyens de signalisation suspendent le fonctionnement du dispositif, un document signalé étant situé dans un des réceptacles de sortie (1668, 2208).

3. Dispositif selon la revendication 2, dans lequel les moyens de signalisation suspendent le fonctionnement du dispositif, un document signalé étant le dernier document délivré à l'un des réceptacles de sortie (1668, 2208).

4. Dispositif selon la revendication 1, comprenant en outre un poste d'inspection (1690, 1699) et dans lequel les moyens de signalisation suspendent le fonctionnement du dispositif, un document signalé étant situé dans ledit poste d'inspection (1690, 1699).

5. Dispositif selon l'une quelconque des revendications 1 à 4, dans lequel la caractéristique est de déterminer la dénomination d'un document et dans lequel les moyens de signalisation signalent les documents dont la dénomination n'est pas déterminée par ladite unité de discrimination (1666).

6. Dispositif selon la revendication 5, dans lequel les moyens destinés à indiquer à un opérateur dudit dispositif la valeur d'un quelconque document signalé sont adaptés pour permettre à l'opérateur d'indiquer la valeur de tout document dont la dénomination n'est pas déterminée par ladite unité de discrimination (1666), un document dont la dénomination n'est pas déterminée par ladite unité de discrimination étant un document sans appellation, lesdits moyens affectant de manière appropriée ledit un ou plusieurs compteurs.

7. Dispositif selon l'une quelconque des revendications 1 à 6, comprenant en outre un logement pour ledit réceptacle d'entrée, ladite unité de discrimination, ledit un ou plusieurs réceptacles de sortie et ledit mécanisme de transport ; dans lequel lesdits moyens destinés à indiquer à un opérateur dudit dispositif la valeur d'un quelconque document signalé sont fixés au dit logement.

8. Dispositif selon l'une quelconque des revendications 1 à 7, dans lequel lesdits moyens destinés à indiquer à un opérateur dudit dispositif la valeur d'un quelconque document signalé comprennent des éléments de sélection de dénomination.

9. Dispositif selon l'une quelconque des revendications 1 à 8, dans lequel lesdits un ou plusieurs compteurs comprennent :
soit (a) un ou plusieurs compteurs de dénominations associés à une ou plusieurs dénominations ; chaque compteur conservant la trace du nombre de documents discriminés appartenant à la dénomination associée tel que déterminé par ladite unité de discrimination ; ou
(b) un compteur de valeur totale maintenant la valeur totale desdits documents alors qu'ils sont discriminés par ladite unité de discrimination ; ou
(c) à la fois un ou plusieurs compteurs de dénominations et un compteur de valeur totale.

10. Dispositif selon la revendication 9, dans lequel lesdits moyens pour indiquer à un opérateur dudit dispositif la valeur de tout document signalé comprennent des éléments de sélection de dénominations correspondant à une ou plusieurs dénominations moyennant quoi la sélection d'un desdits éléments de sélection de dénomination (a) augmente soit (i) un compteur de dénomination correspondant à la dénomination dudit élément de sélection de dénomination, (ii) ledit compteur de valeur totale par la valeur associée audit élément de sélection de dénomination sélectionnée, ou (iii) les deux et (b) redémarre l'opération dudit dispositif de comptage et discrimination de devises, lesdits éléments de sélection de dénominations permettant au dit opérateur d'incrémenter de manière commode un compteur de dénominations et/ou un compteur de valeur totale respectifs et de redémarrer le fonctionnement du dispositif de comptage et de discrimination de devises quand ledit opérateur détermine que ledit document non discriminé est acceptable ;
et dans lequel les moyens pour redémarrer comprennent un élément de continuation (165), dont la sélection fait reprendre le fonctionnement dudit dispositif de comptage et de discrimination de devises sans augmenter un desdits compteurs de dénomination dudit compteur de valeur totale.

11. Dispositif selon l'une quelconques des revendications 1 à 10, dans lequel lesdits moyens pour indiquer à un opérateur dudit dispositif la valeur de tout document signalé comprennent une pluralité de clés de dénomination (64a - 64g), chaque clé étant associée à une dénomination donnée.

12. Dispositif selon la revendication 11, dans lequel la sélection de l'une desdites pluralité de clés de dénomination (64a - 64g) provoquent la reprise du fonctionnement du dispositif.

13. Dispositif selon l'une quelconque des revendications 1 à 12, comprenant :
un panneau de commande (61) possédant un dispositif d'entrée adaptée pour recevoir une entrée d'un opérateur du dispositif ; et
un processeur couplé électriquement au capteur et au panneau de commande et programmé pour :
(a) dénommer les documents ;
(b) garder une trace de la valeur des documents traités ;
(c) mettre un signal quand le processeur détecte un document répondant ou manquant à répondre aux critères prédéterminés ;
(d) suspendre le fonctionnement du dispositif quand le signal est mis ;
(e) permettre à l'opérateur, à la suspension du fonctionnement du dispositif, de désigner par l'intermédiaire du panneau de commande la dénomination d'un document signalé ; et
(f) permettre à l'opérateur, à la suspension du fonctionnement du dispositif de redémarrer le fonctionnement du dispositif sans désigner la dénomination d'un document signalé.

14. Dispositif selon l'une quelconque des revendications 1 à 12 comprenant :
un panneau de commande (61) possédant un dispositif d'entrée adaptée pour recevoir une entrée d'un opérateur du dispositif ; et
un processeur couplé électriquement au capteur et au panneau de commande et programmé pour :
(a) dénommer les documents ;
(b) garder une trace de la valeur des documents traités ;
(c) mettre un signal quand le processeur de dénominations est incapable d'identifier la dénomination d'un document ;
(d) suspendre le fonctionnement du dispositif quand le signal est mis ;
(e) permettre à l'opérateur, à la suspension du fonctionnement du dispositif, de désigner par l'intermédiaire du panneau de commande la dénomination d'un document dont la dénomination n'est pas déterminée par le processeur ; et
(f) permettre à l'opérateur, à la suspension du fonctionnement du dispositif de redémarrer le fonctionnement du dispositif sans désigner la dénomination d'un document dont la dénomination n'est pas déterminée par le processeur.

15. Dispositif selon l'une quelconque des revendications 1 à 12, comprenant :
une pluralité de clés de dénomination (64a - 64g), chaque clé étant associée à une dénomination donnée ; et
une clé de continuation (65);
dans lequel le fonctionnement du dispositif est suspendu quand l'unité de discrimination est incapable d'identifier la dénomination d'un document et dans lequel l'utilisation d'une de la pluralité de clés de dénomination contraint la dénomination correspondante à être sélectionnée et dans lequel l'utilisation de la clé de continuation provoque la reprise du fonctionnement du dispositif.

16. Dispositif selon la revendication 15, dans lequel l'utilisation d'une de la pluralité des clés de dénomination provoque l'incrément d'un ou plusieurs compteurs de manière appropriée sur la base de la dénomination associée à la clé de dénomination qui est sélectionnée.

17. Dispositif selon la revendication 16, dans lequel l'utilisation de l'une de la pluralité des clés de dénomination provoque de plus la reprise du fonctionnement du dispositif.

18. Dispositif selon la revendication 16, dans lequel le fonctionnement du dispositif est suspendu, le document dont l'unité de discrimination est incapable d'identifier la dénomination étant situé dans le réceptacle de sortie permettant ainsi son retrait avant l'utilisation de la clé de continuation (165).

19. Dispositif selon la revendication 15, dans lequel l'utilisation d'une clé après l'utilisation de l'une des clés de dénomination contraint à indiquer au dispositif la dénomination associée à la clé de dénomination utilisée.

20. Dispositif selon les revendications 1 à 12, comprenant :
une pluralité de clés de dénomination (2506a-2506g), chaque clé étant associée à une dénomination donnée ; et
une ou plusieurs clés supplémentaires (2510, 2512) ;
dans lequel le fonctionnement du dispositif est suspendu quand l'unité de discrimination est incapable d'identifier la dénomination d'un document et dans lequel l'utilisation de l'une de la pluralité des clés de dénomination provoque la sélection de la dénomination correspondante et dans lequel l'utilisation de l'une des clés supplémentaires (2512) provoque la reprise du fonctionnement du dispositif sans affecter de manière négative le ou la pluralité de compteurs.

21. Dispositif selon la revendication 20, dans lequel l'utilisation de l'une des clés supplémentaires (2510) après l'utilisation de l'une des clés de dénomination contraint d'indiquer au dispositif la dénomination associée à la clé de dénomination utilisée.

22. Dispositif selon la revendication 20, dans lequel l'utilisation de l'une des clés supplémentaires (2510) après l'utilisation de l'une des clés de dénomination provoque l'incrémentation appropriée du ou des compteurs sur la base de la dénomination associée à la clé de dénomination utilisée.

23. Dispositif selon l'une quelconque des revendications 1 à 22 comprenant en outre des moyens destinés à guider (2304, 2314a - 2314g) un opérateur du dispositif sur la dénomination d'un document signalé.

24. Dispositif selon la revendication 23, dans lequel le document signalé est un document sans appellation et lesdits moyens de guidage suggèrent initialement que la dénomination d'un document sans appellation se base sur des critères sélectionnés à partir du groupe composé : des informations relatives au document immédiatement antérieur, des dernières informations sur les derniers documents sans appellations, des dernières informations sur les documents avec appellation, des informations comparatives sur des données permanentes et numérisées, des informations définies pour l'utilisateur, des informations définies pour le fabricant, des informations historiques, des informations de défaut et de base aléatoire.

25. Dispositif selon la revendication 23, dans lequel le document signalé est un document sans appellation et dans lequel lesdits moyens de guidage suggèrent initialement que la dénomination d'un document sans appellation soit la même que celle d'un document immédiatement antérieur.

26. Dispositif selon la revendication 23, dans lequel le document signalé est un document sans appellation et dans lequel lesdits moyens de guidage suggèrent initialement que la dénomination d'un document sans appellation soit la même que celle du dernier document dont la dénomination fut déterminée par ladite unité de discrimination.

27. Dispositif selon la revendication 23, dans lequel le document signalé est un document sans appellation et dans lequel lesdits moyens de guidage suggèrent initialement que la dénomination d'un document sans appellation soit la même que celle du dernier document qui était un document sans appellation.

28. Dispositif selon la revendication 23, dans lequel le document signalé est un document sans appellation et dans lequel ladite unité de discrimination détermine la dénomination d'un document en comparant des données numérisées recouvrées depuis ledit document par ledit détecteur avec les données permanentes associées à un ou plusieurs documents authentiques et dans lequel lesdits moyens de guidage suggèrent initialement que la dénomination d'un document sans appellation soit la dénomination associée aux données permanentes qui correspondent de la manière la plus proche aux données numérisées.

29. Dispositif selon l'une quelconque des revendications 1 à 28 possédant un réceptacle de sortie unique (1668).

30. Dispositif selon l'une quelconque des revendications 1 à 28, dans lequel le dispositif possède exactement deux réceptacles de sortie.

31. Dispositif selon l'une quelconque des revendications 1 à 28, dans lequel le dispositif possède une pluralité de réceptacles de sortie (2208).

32. Dispositif selon l'une quelconque des revendications 1 à 28, dans lequel le dispositif possède moins de réceptacles de sortie que le nombre de dénominations que le dispositif est adapté à discriminer.

33. Procédé de discrimination et de comptage de documents en devises utilisant un dispositif de comptage et de discrimination de devises destiné à recevoir une pile de documents en devises, comptant et discriminant rapidement les documents dans la pile puis ré-empilant les documents, comprenant :
la réception d'une pile de documents en devises d'une pluralité de dénominations pour être discriminées dans un réceptacle d'entrée (1664) du dispositif de discrimination de devises ;
le transport desdits documents en devises, un à un, dudit réceptacle d'entrée vers un ou plusieurs réceptacles de sortie en passant dans un détecteur d'une unité de discrimination (1666) ; discriminer la dénomination desdits documents en devises d'une pluralité de dénominations ; conserver la trace de la valeur des documents discriminés à l'aide d'un ou plusieurs compteurs ;
signaler les documents répondant ou manquant à répondre à une caractéristique prédéterminée en suspendant le fonctionnement du dispositif ;
**caractérisé en ce qu'**il comprend en outre
soit
(a) indiquer manuellement la valeur d'un quelconque document signalé (61, 2302) et affecter de manière appropriée ledit un ou plusieurs compteurs ; soit
(b) redémarrer le fonctionnement du dispositif (61, 2302) sans indiquer la valeur d'un document signalé et sans affecter de manière négative ledit un ou plusieurs compteurs.

34. Procédé selon la revendication 33, dans lequel le dispositif possède un tableau de commande (61) comprenant en outre :
soit
(a) utiliser le panneau de commande pour communiquer manuellement la dénomination d'un document signalé ; soit
(b) utiliser le tableau de commande pour redémarrer manuellement le fonctionnement du dispositif sans communiquer la dénomination du document signalé à l'unité de discrimination.

35. Procédé selon la revendication 34, dans lequel la caractéristique prédéterminée est que l'unité de discrimination ne réussit pas à déterminer la dénomination d'un document, un document dont la dénomination n'est pas déterminée étant dénommée un document sans appellation et dans lequel l'opérateur soit :
(a) utilise le panneau de commande pour communiquer manuellement à l'unité de discrimination la dénomination d'un document dont la dénomination n'est pas déterminée par l'unité de discrimination ; soit
(b) utilise le panneau de commande pour redémarrer manuellement le fonctionnement du dispositif sans communiquer à l'unité de discrimination la dénomination d'un document dont la dénomination n'est pas déterminée par l'unité de discrimination.

36. Procédé selon la revendication 34 ou 35 comprenant en outre la reprise du fonctionnement du dispositif de discrimination après que l'opérateur a communiqué la dénomination du document.

37. Procédé selon l'une quelconque des revendications 34 à 36, dans lequel l'étape de suspension de l'alimentation est exécutée de façon à ce que le document signalé soit situé dans un réceptacle de sortie et comprenant en outre le retrait manuel du document signalé du réceptacle de sortie puis l'utilisation du panneau de commande pour redémarrer l'alimentation sans indiquer la dénomination du document signalé.

38. Procédé selon l'une quelconque des revendications 34 à 37, dans lequel le dispositif possède des clés de dénomination et une clé de continuation et dans lequel la caractéristique prédéterminée est que l'unité de discrimination ne réussit pas à déterminer la dénomination d'un document, un document dont la dénomination n'est pas déterminée étant dénommée un document sans appellation et comprenant :
désigner manuellement la dénomination d'un document dont la dénomination n'est -pas déterminée automatiquement en utilisant une clé de dénomination appropriée ou en utilisant manuellement la clé de continuation du dispositif pour contraindre l'alimentation à être reprise sans désigner la dénomination d'un document dont la dénomination n'est pas déterminée automatiquement.

39. Procédé selon la revendication 38 comprenant en outre l'incrémentation d'un compteur approprié en réponse à l'utilisation de la clé de dénomination.

40. Procédé selon la revendication 39 comprenant en outre la reprise du fonctionnement en réponse à l'utilisation de la clé de dénomination.

41. Procédé selon la revendication 38, dans lequel le dispositif de discrimination possède une clé supplémentaire en plus des clés de dénomination et comprend en outre, après avoir désigné manuellement la dénomination, l'incrémentation d'un compteur approprié par le dispositif de discrimination en réponse à l'utilisation de la clé supplémentaire.

42. Procédé selon la revendication 41, comprenant en outre la reprise du fonctionnement en réponse à l'utilisation de la clé supplémentaire.

43. Procédé selon l'une quelconque des revendications 34 à 35, dans lequel le dispositif possède des clés incluant des clés de dénomination et une clé de continuation et comprenant :
(i) la sélection manuelle de la dénomination d'un document dont la dénomination n'est pas déterminée par l'unité de discrimination en utilisant une clé de dénomination ou
(ii) la sélection manuelle d'une clé de continuation.

44. Procédé selon la revendication 43, comprenant en outre l'utilisation manuelle d'une clé après la sélection d'une dénomination pour provoquer l'indication au dispositif de la dénomination sélectionnée.

45. Procédé selon l'une quelconque des revendications 34 à 35, dans lequel le dispositif possède des clés incluant des clés de dénomination et une clé de continuation et comprenant :
(i) la sélection manuelle d'une clé de dénomination appropriée correspondant à la dénomination d'un document dont la dénomination n'est pas déterminée par l'unité de discrimination ; ou
(ii) la sélection manuelle d'une clé de continuation.

46. Procédé selon la revendication 45, dans lequel la sélection d'une clé de dénomination appropriée comprend un défilement des dénominations à sélectionner.

47. Procédé selon la revendication 45 ou la revendication 46, comprenant en outre la sélection manuelle par l'opérateur d'une clé après la sélection d'une clé de dénomination appropriée pour provoquer l'indication de la dénomination sélectionnée au dispositif.
